# EUROPÄISCHE PATENTSCHRIFT

(11) **EP 4 314 656 B1**
(45) Veröffentlichungstag und Bekanntmachung des Hinweises auf die Patenterteilung: **16.04.2025**
(21) Anmeldenummer: 22717719.3
(22) Anmeldetag: 18.03.2022
(51) Int. Cl.: F23G 7/06, F23J 15/02

(54) **ANLAGE UND VERFAHREN FÜR DIE REGENERATIVE THERMISCHE OXIDATION VON ROHGAS**
SYSTEM AND METHOD FOR THE REGENERATIVE THERMAL OXIDATION OF CRUDE GAS
SYSTÈME ET PROCÉDÉ D'OXYDATION THERMIQUE RÉGÉNÉRATIVE DE GAZ BRUT

(30) Priorität: 25.03.2021 DE 102021107533
(43) Veröffentlichungstag der Anmeldung: 07.02.2024
(73) Patentinhaber: Dürr Systems AG, Stuttgart, 74321 Bietigheim-Bissingen (DE)
(72) Erfinder: WALDDÖRFER, Carsten, 75031 Eppingen (DE); HAGEN, Matthias, 95460 Bad Berneck (DE)
(74) Vertreter: Pfiz/Gauss Patentanwälte PartmbB
(86) Internationale Anmeldenummer: PCT/DE2022/100213
(87) Internationale Veröffentlichungsnummer: WO 2022/199753

(56) Entgegenhaltungen:
- EP-B2- 1 593 909
- WO-A1-2012/046580
- DE-A1- 102006 058 696
- US-A1- 2011 132 197

## Beschreibung

Die Erfindung betrifft eine Anlage für die regenerative thermische Oxidation von Rohgas mit einer Brennkammer und mit einer Vielzahl von Regeneratoren, die jeweils eine mit der Brennkammer kommunizierende Regeneratorkammer mit einem darin angeordneten Wärmetauscher haben, mit einer Zufuhrleitung für das Zuführen von Rohgas in eine Rohgasleitung und mit einer Reingasleitung für das Ableiten von Reingas, wobei eine Regeneratorkammer eines Regenerators jeweils unabhängig von den Regeneratorkammern der übrigen Regeneratoren sowohl über ein einstellbares Rohgasabsperrorgan wahlweise an die Rohgasleitung angeschlossen und von der Rohgasleitung getrennt als auch über ein einstellbares Reingasabsperrorgan wahlweise an die Reingasleitung angeschlossen und von der Reingasleitung getrennt werden kann. Darüber hinaus betrifft die Erfindung ein Verfahren zum Betrieb einer Anlage für das Behandeln von Rohgas mittels regenerativer thermischer Oxidation, wobei die Anlage eine Brennkammer und eine Vielzahl von Regeneratoren aufweist, die mit der Brennkammer kommunizieren und die jeweils eine Regeneratorkammer mit einem darin angeordneten Wärmetauscher haben, bei dem abwechselnd wenigstens einer der Regeneratoren mit Spülgas gespült wird, wenigstens zwei Regeneratoren Rohgas zugeführt, aus wenigstens zwei Regeneratorkammern Reingas abgeleitet und wenigstens eine Regeneratorkammer in einem Pyrolysebetrieb gefahren wird.

Aus der DE 10 2004 022 737 A1 und der EP 1 593 909 B2 ist jeweils eine derartige Anlage und ein derartiges Verfahren bekannt.

Anlagen für die regenerative thermische Oxidation (RTO) werden in unterschiedlichen Industrien eingesetzt, um Rohgas von brennbaren Schadstoffen zu befreien, indem diese in einer Brennkammer bei hoher Temperatur oxidiert wird. In die Brennkammer wird das Rohgas dabei durch erste Regeneratoren zugeführt, die einen in einer Regeneratorkammer aufgenommenen Wärmetauscher enthalten, der für das Vorwärmen des Rohgases dient, bevor es in die Brennkammer gelangt. Der Wärmetauscher umfasst dabei vorzugsweise eine Wärmespeichermasse, welche in einem vorhergehenden Prozessschritt durch Zufuhr von Wärmeenergie aufgeheizt wurde. Die Wärmespeichermasse gibt dabei beim Durchströmen mit Rohgas Wärme an das Rohgas und heizt dieses vor Eintritt in die Brennkammer auf. Das in der Brennkammer von Schadstoffen befreite Rohgas, das die Fachwelt auch als Heißgas oder heißes Reingas bezeichnet, wird dann durch zweite Regeneratoren mit einem in einer Regeneratorkammer angeordneten Wärmetauscher als Reingas ausgeleitet, wobei auf den Wärmetauscher Wärme übertragen wird. Vorzugsweise wird dabei Wärme auf eine Wärmespeichermasse dieses Wärmetauschers übertragen. Wenn der Wärmetauscher in dem ersten Regenerator in gewissem Umfang abgekühlt ist, erfolgt ein Umschalten der Anlage. Das Rohgas wird dann durch die zweiten Regeneratoren in die Brennkammer geführt und aus den ersten Regeneratoren als Reingas ausgeleitet. Je nach Zusammensetzung des Rohgases ermöglicht das fortlaufende Umschalten der Anlage ein Verbrennen der Schadstoffe in der Brennkammer ohne Energiezufuhr oder bei lediglich geringer Energiezufuhr von außen.

Die WO 2012/046580 A1 beschreibt eine RTO-Anlage für das Reinigen von Rohgas, das organische Substanzen enthält, nämlich flüchtige organische Substanzen, die bei Einsatz von Klebstoffen, bei Druck- und Lackierprozessen sowie in Einrichtungen, in denen organische Lösungsmittel für das Reinigen eingesetzt werden, und in Chemiefabriken anfallen. In dieser Anlage gibt es ein Filter, durch das für das Spülen eines Regenerators in der Anlage eingesetztes Spülgas in das zu reinigende Rohgas zurückgeführt werden kann. Weil das Reingas beim Durchströmen der Wärmetauscher in der Regeneratorkammer eines Regenerators abkühlt, können sich dort Bestandteile aus dem Rohgas niederschlagen, die in der Brennkammer nicht oder nur unvollständig verbrannt oder dort durch Umwandlung entstanden sind.

Bei den in der graphitverarbeitenden Industrie eingesetzten RTO-Anlagen entstehen z. B. im Lauf der Zeit in den Regeneratorkammern Verblockungen aus Teerstoffen.

Es ist bekannt, die Regeneratorkammern in solchen RTO-Anlagen in regelmäßigen Zeitabständen durch Ausbrennen mit einer Gasflamme, durch Einbringen von heißem Reingas aus der Brennkammer oder durch anderweitiges Einbringen heißer Luft einer Pyrolyse zu unterziehen, wodurch die Teerstoffe aus den Regeneratorkammern entfernt und mit oder ohne Nachbehandlung an die Umwelt freigesetzt werden. Die Regeneratorkammern werden hierfür mit einer Gasflamme, zum Beispiel in der Brennkammer der RTO-Anlage, ausgebrannt, welche die Teerstoffe verbrennt.

Die DE 10 2006 058 969 A1 beschreibt z.B. eine Anlage für die regenerative thermische Oxidation von Rohgas, die für die regenerative Nachverbrennung von klebrigen Schadstoffpartikeln in Abgas, insbesondere von Kohle- und/oder Graphitpartikeln in Abluft ausgelegt ist. Hier wir Rohgas aus einer Rohgasleitung in Reingas zu überführt, das durch eine Reingasleitung an die Umwelt freigesetzt werden kann. In der Anlage gibt es Nachverbrennungseinrichtungen für die regenerative thermische Oxidation, die jeweils eine Brennkammer und Regeneratorkammern haben, die mit der Brennkammer kommunizieren. Für die Regenatorkammern einer jeden Nachverbrennungseinrichtung kann in der Anlage abwechselnd ein Rohgas-Reinigungsbetrieb, in dem in eine Regeneratorkammer eingeleitetes Rohgas gereinigt wird, ein Spülbetrieb, in dem die Regeneratorkammer mit Reingas gespült wird, das dann als Spülgas in eine andere Regeneratorkamer gelangt, und ein Pyrolyse-Betrieb eingestellt werden, in dem eine Oxidation von Schmutzpartikeln in der Regeneratorkammer bewirkt wird. Die in dem Pyrolysebetrieb einer Regeneratorkammer erzeugten Oxidationsprodukte werden in der Brennkammer verbrannt, wobei die Verbrennungsprodukte durch eine andere Regeneratorkammer in die Reingasleitung und aus dieser an die Umwelt gelangen.

Stickoxide im Rohgas lassen sich nicht ohne weiteres durch Verbrennen in einer Brennkammer entfernen. Um Rohgas von Stickoxiden zu befreien ist es bekannt, dieses in einem Reaktionsraum bei definierten Temperaturen mit Ammoniak zu Wasser und Stickstoff umzusetzen. Hier können aufgrund von Temperaturschwankungen und Änderungen der Zusammensetzung des Rohgases Ammoniumsalze entstehen, die in den Regeneratorkammern von RTO-Anlagen Niederschlag bilden und dort als feste und/oder schleimförmige Verblockungen den Anlagenbetrieb beeinträchtigen, weil hierdurch die Leistung der Wärmetauscher verringert und für das Rein- und Rohgas der Strömungswiderstand erhöht wird. Da Ammoniumsalze in der Regel wasserlöslich sind, können sie aus den Regeneratorkammern einer RTO-Anlage durch Auswaschen entfernt werden, was allerdings wiederum erfordert, dass die RTO-Anlage stillgelegt wird, weil aufwändige Aufheiz- und Kühlvorgänge durchgeführt werden müssen.

Aufgabe der Erfindung ist es, die regenerative Oxidation von Rohgas in einem umweltfreundlichen Dauerbetrieb einer Anlage zu ermöglichen.

Diese Aufgabe wird durch die in Anspruch 1 angegebene Anlage und das in Anspruch 24 angegebene Verfahren gelöst. Vorteilhafte Ausführungsformen und Weiterbildungen der Erfindung sind in den abhängigen Ansprüchen angegeben.

Eine erfindungsgemäße Anlage für die regenerative thermische Oxidation von Rohgas hat eine Brennkammer und weist eine Vielzahl von Regeneratoren auf, die jeweils eine mit der Brennkammer kommunizierende Regeneratorkammer mit einem darin angeordneten Wärmetauscher enthalten. In der Anlage gibt es eine Zufuhrleitung für das Zuführen von Rohgas in eine Rohgasleitung und eine Reingasleitung für das Ableiten von Reingas, wobei eine Regeneratorkammer eines Regenerators jeweils unabhängig von den Regeneratorkammern der übrigen Regeneratoren sowohl über ein einstellbares Rohgasabsperrorgan wahlweise an die Rohgasleitung angeschlossen und von der Rohgasleitung getrennt als auch über ein einstellbares Reingasabsperrorgan wahlweise an die Reingasleitung angeschlossen und von der Reingasleitung getrennt werden kann. Die Anlage enthält eine Abscheideeinrichtung für das Abscheiden von Schwebstoffpartikeln aus über die Zufuhrleitung in die Rohgasleitung zugeführtem Rohgas.

In einem erfindungsgemäßen Verfahren zum Betrieb einer Anlage für das Behandeln von Rohgas mittels regenerativer thermischer Oxidation, wobei die Anlage eine Brennkammer und eine Vielzahl von Regeneratoren aufweist, die mit der Brennkammer kommunizieren und die jeweils eine Regeneratorkammer mit einem darin angeordneten Wärmetauscher haben, wird abwechselnd wenigstens einer der Regeneratoren mit Spülgas gespült, wenigstens zwei der Regeneratoren Rohgas zugeführt, aus der Regeneratorkammer wenigstens zwei der Regeneratoren Reingas abgeleitet und die Regeneratorkammer wenigstens eines der Regeneratoren in einem Ausbrandbetrieb gefahren. Dabei wird das beim Ausbrandbetrieb der Regeneratorkammer des wenigstens einen Regenerators freigesetzte Ausbrandgas in das zu behandelnden Rohgas zurückgeführt wird und mit dem Rohgas vor dem Zuführen an die Regeneratoren gefiltert.

Der Erfindung liegt der Gedanke zugrunde, dass sich in einer Regeneratorkammer an den Oberflächen des Wärmetauschers niedergeschlagene Feststoffe aus der Regeneratorkammer entfernen lassen, indem die Regeneratorkammer auf eine Temperatur gebracht wird, bei der diese Feststoffe in die gasförmige Phase übergehen und aus der Regeneratorkammer ausströmen. Die Erfindung nutzt aus, dass das Material der Feststoffe durch Abkühlen außerhalb der Regeneratorkammer aus der gasförmigen Phase aufgrund von Kristallisation oder Interaktion mit anderen Substanzen wieder fest oder zumindest flüssig wird, so dass aus einem Gasstrom in einem Abscheider abgetrennt werden kann, damit das Material nicht an die Umwelt freigesetzt wird. Indem der von den Feststoffen befreite Gasstrom wieder in die Brennkammer geleitet wird, lässt sich erreichen, dass Schadstoffe, die in dem Abscheider nicht abgeschieden wurden, nicht unmittelbar an die Umwelt freigesetzt werden, sondern in der Brennkammer verbrannt werden können.

Auf diese Weise kann somit nicht nur vermieden werden, dass eine RTO-Anlage für das Reinigen der Regeneratorkammern von Regeneratoren stillgelegt werden muss, sondern es lässt sich erreichen, dass das Material in den Regeneratorkammern angesammelter Feststoffe wie z. B. Ammoniumsalze oder auch phosphorhaltige Substanzen sowie deren Zersetzungsprodukte in Form von Staub, Säuren oder Ammoniak nicht in die Umwelt gelangt.

Die Abscheideeinrichtung kann insbesondere als ein Filter für das Ausfiltern von Feststoffpartikeln aus einem gasförmigen Fluid, z. B. als ein Schlauchfilter, Taschenfilter, Kerzenfilter oder als ein Elektrofilter ausgelegt sein.

Die Anlage kann eine an einer Anschlussstelle an die Zufuhrleitung angeschlossene Ausbrandgasleitung aufweisen, die zum Aufnehmen von feststoffhaltigem Ausbrandgas aus den Regeneratorkammern dient, wobei die Ausbrandgasleitung den unterschiedlichen Regeneratorkammern jeweils zugeordnete Regeneratorkammeranschlussstellen hat und wobei die Regeneratorkammer eines jeden der Regeneratoren jeweils unabhängig von den Regeneratorkammern der übrigen Regeneratoren über ein einstellbares Gasflusssteuerorgan wahlweise mit der ihr zugeordneten Regeneratorkammeranschlussstelle der Ausbrandgasleitung verbunden oder von dieser getrennt werden kann.

Von Vorteil ist es, wenn ein jedes Gasflusssteuerorgan das Einstellen unterschiedlicher Öffnungsquerschnitte für Hindurchtreten von gasförmigem Fluid ermöglicht. Insbesondere ist es von Vorteil, wenn in der Ausbrandgasleitung für das Einstellen der Abfuhr von gasförmigem Fluid in aus den Regeneratorkammern der Regeneratoren ein Ausbrandgassteuerorgan angeordnet ist.

Bei einer bevorzugten Ausführungsform der Anlage ist vorgesehen, dass die Ausbrandgasleitung auch zum Aufnehmen von durch die Regeneratorkammern strömendem Spülgas dient.

Bevorzugt enthält die Anlage eine Steuereinrichtung für das das Steuern der Rohgasabsperrorgane und der Reingasabsperrorgane sowie der Gasflusssteuerorgane in einem Ausbrandbetrieb, in dem über ein definiertes Zeitintervall
i. den Regeneratorkammern eines ersten, dritten und sechsten Regenerators aus der Rohgasleitung Rohgas zugeführt,
ii. Reingas aus den Regeneratorkammern eines zweiten und vierten Regenerators in die Reingasleitung eingeleitet,
iii. aus einer Regeneratorkammer eines fünften der Regeneratoren Spülgas in die Ausbrandgasleitung bei einem ersten Öffnungsquerschnitt des der Regeneratorkammer zugeordneten Gasflusssteuerorgans eingeleitet; und
iv. aus einer Regeneratorkammer eines siebten der Regeneratoren in die Ausbrandgasleitung bei einem gegenüber dem ersten Öffnungsquerschnitt reduzierten zweiten Öffnungsquerschnitt des der Regeneratorkammer zugeordneten Gasflusssteuerorgans Ausbrandgas in die Ausbrandgasleitung eingeleitet wird.

Alternativ hierzu kann die Anlage auch so betreiben werden, dass
i. den Regeneratorkammern eines ersten und dritten Regenerators der Regeneratoren aus der Rohgasleitung Rohgas zugeführt,
ii. Reingas aus den Regeneratorkammern eines zweiten, vierten und sechsten Regenerators der Regeneratoren in die Reingasleitung eingeleitet,
iii. aus einer Regeneratorkammer eines fünften der Regeneratoren Spülgas in die Ausbrandgasleitung bei einem ersten Öffnungsquerschnitt des der Regeneratorkammer zugeordneten Gasflusssteuerorgans eingeleitet; und
iv. aus einer Regeneratorkammer eines siebten der Regeneratoren in die Ausbrandgasleitung bei einem gegenüber dem ersten Öffnungsquerschnitt reduzierten zweiten Öffnungsquerschnitt des der Regeneratorkammer zugeordneten Gasflusssteuerorgans Ausbrandgas in die Ausbrandgasleitung eingeleitet wird.

Die Steuereinrichtung für das das Steuern der Rohgasabsperrorgane und der Reingasabsperrorgane sowie der Gasflusssteuerorgane ist möglichst auch für einen Normalbetrieb ausgelegt, bei dem
i. den Regeneratorkammern eines ersten, dritten und sechsten Regenerators aus der Rohgasleitung Rohgas zugeführt,
ii. Reingas aus den Regeneratorkammern eines zweiten und vierten und sechsten Regenerators in die Reingasleitung eingeleitet, und
iii. aus einer Regeneratorkammer eines siebten der Regeneratoren Spülgas in die Ausbrandgasleitung bei einem ersten Öffnungsquerschnitt des der Regeneratorkammer zugeordneten Gasflusssteuerorgans eingeleitet wird.

Zu bemerken ist, dass hier z. B. in sechs aufeinanderfolgenden Zeitintervallen der fünfte der Regeneratoren jeweils unterschiedlich und der siebte der Regeneratoren jeweils identisch sein kann. Zu bemerken ist auch, dass hier dann der siebte der Regeneratoren in sieben aufeinanderfolgenden Zeitintervallen jeweils unterschiedlich sein kann.

Die Anlage kann eine Spülgasleitung enthalten, die zum Aufnehmen von durch die Regeneratorkammern strömendem Spülgas dient, wobei die Spülgasleitung den unterschiedlichen Regeneratorkammern jeweils zugeordnete Regeneratorkammeranschlussstellen aufweist und wobei die Regeneratorkammer eines jeden der Regeneratoren jeweils unabhängig von den Regeneratorkammern der übrigen Regeneratoren über ein einstellbares Spülgassteuerorgan wahlweise mit der ihr zugeordneten Regeneratorkammeranschlussstelle der Spülgasleitung verbunden oder von dieser getrennt werden kann.

Insbesondere kann die Anlage auch eine Steuereinrichtung für das Steuern der Rohgasabsperrorgane, der Reingasabsperrorgane und der Gasflusssteuerorgane sowie der Spülgassteuerorgane in einem Ausbrandbetrieb enthalten, in dem über ein definiertes Zeitintervall
i. den Regeneratorkammern eines ersten, dritten und sechsten Regenerators aus der Rohgasleitung Rohgas zugeführt,
ii. Reingas aus den Regeneratorkammern eines zweiten und vierten Regenerators in die Reingasleitung eingeleitet,
iii. aus einer Regeneratorkammer eines fünften der Regeneratoren Spülgas in die Spülgasleitung bei einem ersten Öffnungsquerschnitt des der Regeneratorkammer zugeordneten Spülgassteuerorgans eingeleitet; und
iv. aus einer Regeneratorkammer eines siebten der Regeneratoren in die Ausbrandgasleitung bei einem gegenüber dem ersten Öffnungsquerschnitt reduzierten zweiten Öffnungsquerschnitt des der Regeneratorkammer zugeordneten Gasflusssteuerorgans Ausbrandgas in die Ausbrandgasleitung eingeleitet wird.

Alternativ hierzu kann die Anlage auch so betreiben werden, dass
i. den Regeneratorkammern eines ersten und dritten Regenerators aus der Rohgasleitung Rohgas zugeführt,
ii. Reingas aus den Regeneratorkammern eines zweiten, vierten und sechsten Regenerators in die Reingasleitung eingeleitet,
iii. aus einer Regeneratorkammer eines fünften der Regeneratoren Spülgas in die Spülgasleitung bei einem ersten Öffnungsquerschnitt des der Regeneratorkammer zugeordneten Spülgassteuerorgans eingeleitet; und
iv. aus einer Regeneratorkammer eines siebten der Regeneratoren in die Ausbrandgasleitung bei einem gegenüber dem ersten Öffnungsquerschnitt reduzierten zweiten Öffnungsquerschnitt des der Regeneratorkammer zugeordneten Gasflusssteuerorgans Ausbrandgas in die Ausbrandgasleitung eingeleitet wird.

Die Steuereinrichtung kann dabei für das Steuern der Rohgasabsperrorgane und der Reingasabsperrorgane sowie der Spülgassteuerorgane in einem Wartungsbetrieb dienen, in dem über ein definiertes Zeitintervall
i. den Regeneratorkammern eines ersten, dritten und sechsten Regenerators aus der Rohgasleitung Rohgas zugeführt,
ii. Reingas aus den Regeneratorkammern eines zweiten und vierten Regenerators in die Reingasleitung eingeleitet, und
iii. die Regeneratorkammer eines siebten der Regeneratoren von der Rohgasleitung und von der Reingasleitung sowie von der Spülgasleitung getrennt wird.

Der fünfte der Regeneratoren kann z. B. in sechs aufeinanderfolgenden Zeitintervallen jeweils unterschiedlich und der siebte der Regeneratoren jeweils identisch sein. Auch kann der siebte der Regeneratoren in sieben aufeinanderfolgenden Zeitintervallen jeweils unterschiedlich sein.

Von Vorteil ist es, wenn ein jedes Spülgassteuerorgan in der Anlage das Einstellen unterschiedlicher Öffnungsquerschnitte für Hindurchtreten von Spülgas ermöglicht.

Von Vorteil ist es auch, wenn in der Spülgasleitung für das Einstellen der Abfuhr von gasförmigem Fluid aus den Regeneratorkammern der Regeneratoren ein Spülgassteuerorgan angeordnet ist. In der Spülgasleitung kann ein Gebläse angeordnet sein. Insbesondere kann in der Spülgasleitung für das Einstellen der Abfuhr von gasförmigem Fluid aus den Regeneratorkammern der Regeneratoren ein Spülgassteuerorgan angeordnet sein. Insbesondere kann die Spülgasleitung mit der Reingasleitung verbunden sein und die Reingasleitung mit einem Kamin verbunden sein.

In der Rohgasleitung ist bevorzugt ein einstellbares Absperrorgan angeordnet, das dazu dient, die Zufuhr von Rohgas in die Regeneratorkammern freizugeben oder zu unterbinden. Die Anlage kann eine mit einem Kamin verbundene Rohgasbypassleitung enthalten, die auf einer der Filtereinrichtung zugewandten Seite des Absperrorgans angeordneten Rohgasleitungsanschlussstelle mit der Rohgasleitung kommuniziert. Insbesondere kann auf einer der Filtereinrichtung abgewandten Seite der Rohgasleitungsanschlussstelle für die Rohgasbypassleitung ein Rohgaszufuhrgebläse für das Zuführen von Rohgas an die Regeneratorkammern der Regeneratoren durch die Rohgasleitung angeordnet sein, das eine den Regeneratorkammern zugwandte Druckseite hat.

Die Spülgasleitung kann zwischen dem Rohgaszufuhrgebläse und dem Absperrorgan an die Rohgasleitung angeschlossen sein. Bevorzugt ist in der Rohgasleitung auf einer der Filtereinrichtung zugewandten Seite der Rohgasleitungsanschlussstelle für die Rohgasbypassleitung ein Rohgasfördergebläse für das Fördern von Rohgas durch die Rohgasleitung aus der Filtereinrichtung angeordnet, das eine der Filtereinrichtung zugewandte Saugseite hat. Die Anlage kann z. B. wenigstens sieben Regeneratorkammern enthalten.

Die vorstehend beschriebene Anlage eignet sich insbesondere für die regenerative thermische Oxidation von Rohgasvolumenströmen S mit S ≥ 150.000 m³/h bei Anwesenheit von Ammoniak und anorganischen Säuren. Die Anlage kann damit insbesondere für die regenerative thermische Oxidation von Rohgas mit Stickoxiden verwendet werden und eignet sich insbesondere für den Einsatz in einem Zementwerk.

Im Folgenden wird die Erfindung anhand der in den Figuren in schematischer Weise dargestellten Ausführungsbeispiele näher erläutert.

Es zeigen:
- Fig. 1: ein Zementwerk mit einer SNCR-Anlage und mit einer RTO-Anlage für das Reinigen von Rohgas;
- Fig. 2: eine Ansicht der RTO-Anlage für das Reinigen von Rohgas;
- Fig. 3: einen Normalbetrieb der RTO-Anlage;
- Fig. 4: einen Ausbrandbetrieb der RTO-Anlage;
- Fig. 5: einen Wartungsbetrieb der RTO-Anlage;
- Fig. 6: ein Zementwerk mit einer SNCR-Anlage und mit einer weiteren RTO-Anlage für das Reinigen von Rohgas;
- Fig. 7: eine Ansicht der weiteren RTO-Anlage für das Reinigen von Rohgas; und
- Fig. 8: eine weitere RTO-Anlage für das Reinigen von Rohgas, die insbesondere für den Einsatz in einem Zementwerk ausgelegt ist.

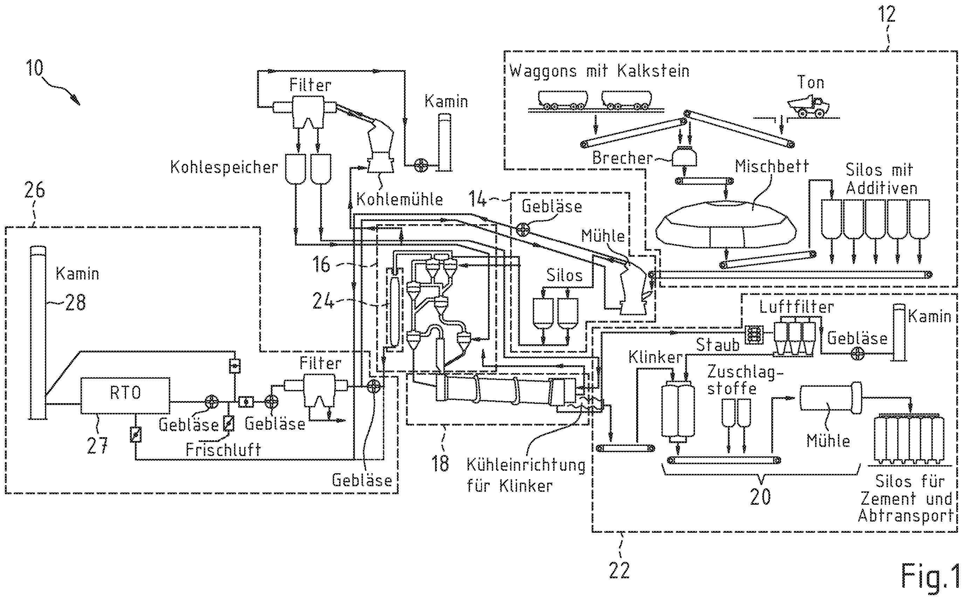

Das in der Fig. 1 gezeigte Zementwerk 10 hat eine Rohstoffaufbereitungsstufe 12, in der Kalkstein und Ton zusammengeführt, grob zerkleinert und als ein vorgemischter Rohstoff gelagert werden. Dem gelagerten, vorgemischten Rohstoff können Zuschlagstoffe aus Silos zugesetzt werden. In dem Zementwerk 10 gibt es eine Verarbeitungsstufe 14, in welcher der vorgemischte Rohstoff in einer Mühle unter Heißgasatmosphäre fein gemahlen und auf Zuführsilos verteilt wird. Das Zementwerk 10 enthält einen Kalzinatorwärmetauscherturm 16 mit einer SCNR-Anlage 24. Der Kalzinatorwärmetauscherturm 16 ist an einen Drehrohrofen 18 angeschlossen, der für das Erzeugen von Klinker dient, das in dem Zementwerk 10 in einer Endstufe 22 verarbeitet wird, die eine Klinkerverarbeitungsstufe 20 aufweist. In dem Kalzinatorwärmetauscherturm 16 werden die fein gemahlenen Rohstoffe aufgegeben und in Wärmetauscherzyklonen im Gegenstrom zu den Abgasen des Drehrohrofens aufgewärmt. Dabei wird aus dem in den Rohstoffen enthaltenen Kalkstein das Kohlendioxid ausgetrieben.

Zu bemerken ist, dass in einer modifizierten Ausführungsform des Zementwerks vorgesehen sein kann, die Wärmetauscherzyklone nicht nur mittels der Abgase des Drehrohrofens aufzuwärmen, sondern diese auch mit Wärme zu versorgen, die in einem Vorkalzinator erzeugt wird, in dem dort z. B. Ersatzbrennstoffe wie z. B. Autoreifen oder Müll verbrannt werden. Dieser Vorkalzinator kann zur Sauerstoffversorgung mit sogenannter Tertiärluft beaufschlagt werden, d. h. mit vorgewärmter Luft aus dem Klinkerkühler.

In dem Drehrohrofen 18 wird das aus dem Kalzinatorwärmetauscherturm 16 in diesen zugeführte Material bei einer Temperatur T von bis zu T ≈ 1.450 °C zu Klinker prozessiert. Der Drehrohrofen 18 enthält hierfür eine als Mehrstoffbrenner ausgebildete Brennereinrichtung und ein Drehrohr. In dem Zementwerk 10 gibt es eine Einrichtung für das Zuführen von Primärluft in den Brenner und eine Einrichtung für das Zuführen von Sekundärluft in das Drehrohr des Drehrohrofens 18. In dem Zementwerk 10 wird der in dem Drehrohr erzeugte heiße Klinker dann an die Endstufe 22 übergeben, die einen Klinkerkühler enthält, der ein Abkühlen des heißen Klinkers mittels Luftzugabe bewirkt. Die bei dem Abkühlen des Klinkes erzeugte Heißluft wird zu einem Teil in den Kalzinatorwärmetauscherturm 16 eingespeist und zu einem anderen Teil durch einen Kamin nach Reinigen in einem Entstaubungsfilter an die Umwelt freigesetzt. Der in dem Entstaubungsfilter abgeschiedene Staub wird zurückgeführt und mit dem gekühlten Klinker im Klinkersilo zusammengeführt. In der Endstufe 22 wird der Klinker für die Fertigstellung des Zements noch mit verschiedenen Zuschlagstoffen, z. B. Gips gemischt, in einer weiteren Mühle feingemahlen und in Zementsilos gelagert. Von dort kann der Zement dann als Endprodukt verpackt und verladen werden.

Aus dem Kalzinatorwärmetauscherturm 16 gelangt in dem Zementwerk 10 vorgewärmtes und weitgehend kalziniertes Material in den Drehrohrofen 18. Die Abgase aus dem Drehrohrofen und dem Kalzinatorwärmetauscherturm 16 werden durch eine SCNR-Anlage 24 geführt, die einen Wärmetauscherturm aufweist, in den Ammoniak eingedüst wird.

In der SNCR-Anlage 24 reagiert das eingedüste Ammoniak mit schädlichem Stickstoffmonoxid (NO) und Stickstoffdioxid (NO2) in den Abgasen des Drehrohrofens 18 bei einer Reaktionstemperatur, die vorzugsweise 850 °C bis 1.100 °C beträgt, überwiegend zu harmlosem molekularem Stickstoff (N2) und Wasser.

In dem Zementwerk 10 werden die in der SCNR-Anlage 24 behandelten Abgase aus dem Drehrohrofen 18 und dem Kalzinatorwärmetauscherturm 16 als Rohgas einer RTO-Anlage 26 für die regenerative thermische Oxidation von Rohgas in einem Anlagenabschnitt 27 zugeführt. Darin können die der SCNR-Anlage 24 als Rohgas zugeführten Abgase mittels regenerativer thermischer Oxidation von Schadstoffen befreit und als Reingas durch einen Kamin 28 an die Umwelt freigesetzt werden.

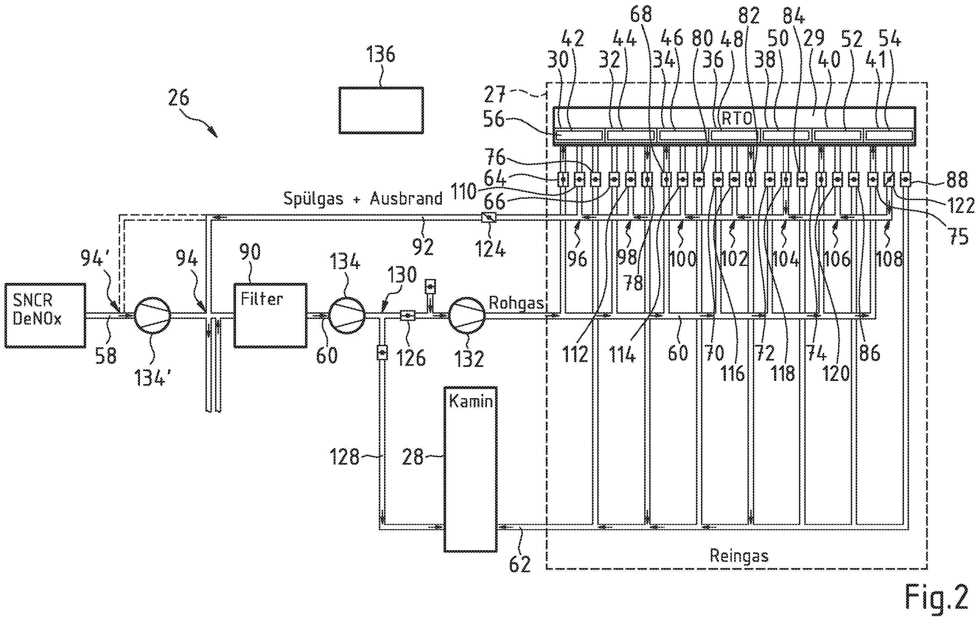

Die Fig. 2 ist eine schematische Ansicht der RTO-Anlage 26 in dem Zementwerk 10. Die RTO-Anlage 26 enthält in dem Anlagenabschnitt 27 für die regenerative thermische Oxidation von Rohgas eine Brennkammer 29 und hat sieben Regeneratoren 30, 32, 34, 36, 38, 40 und 41, die jeweils eine mit der Brennkammer 29 kommunizierende Regeneratorkammer 42, 44, 46, 48, 50, 52, 54 mit einem darin angeordneten Wärmetauscher 56 haben, der aus keramischen Formteilen besteht. Die RTO-Anlage 26 weist eine Zufuhrleitung 58 für das Zuführen von Rohgas in eine Rohgasleitung 60 auf und enthält eine Reingasleitung 62 für das Ableiten von Reingas. In der RTO-Anlage 26 können die Regeneratorkammern 42, 44, 46, 48, 50, 52, 54 der Regeneratoren 30, 32, 34, 36, 38, 40 und 41 jeweils voneinander unabhängig mittels eines einstellbaren Rohgasabsperrorgans 64, 66, 68, 70, 72, 74, 75 an die Rohgasleitung 60 angeschlossen oder von der Rohgasleitung 60 getrennt werden. Entsprechend können die Regeneratorkammern 42, 44, 46, 48, 50, 52, 54 der Regeneratoren 30, 32, 34, 36, 38, 40 und 41 jeweils voneinander unabhängig mittels eines einstellbaren Reingasabsperrorgans 76, 78, 80, 82, 84, 86, 88 an die Reingasleitung 62 angeschlossen und von ihr getrennt werden. Die RTO-Anlage 26 enthält eine Abscheideeinrichtung 90 für das Abscheiden von Schwebstoffpartikeln in aus der Zufuhrleitung 58 in die Rohgasleitung 60 zugeführtem Rohgas. Die Abscheideeinrichtung 90 ist ein mehrstufiges Filter für das Ausfiltern von Feststoffpartikeln aus einem gasförmigen Fluid.

In der RTO-Anlage 26 gibt es eine Ausbrandgasleitung 92. Die Ausbrandgasleitung 92 ist an einer Anschlussstelle 94 an die Zufuhrleitung 58 für das Zuführen von Rohgas in die Rohgasleitung 60 angeschlossen. Die Ausbrandgasleitung 92 dient zum Aufnehmen von feststoffhaltigem Ausbrandgas aus den Regeneratorkammern 42, 44, 46, 48, 50, 52, 54. Die Ausbrandgasleitung 92 weist den unterschiedlichen Regeneratorkammern 42, 44, 46, 48, 50, 52, 54 jeweils zugeordnete Regeneratorkammeranschlussstellen 96, 98, 100, 102, 104, 106, 108 auf. Die Regeneratorkammern 42, 44, 46, 48, 50, 52, 54 eines jeden der Regeneratoren 30, 32, 34, 36, 38, 40 und 41 können in der RTO-Anlage 26 jeweils unabhängig von den Regeneratorkammern der übrigen Regeneratoren über ein einstellbares Gasflusssteuerorgan 110, 112, 114, 116, 118, 120, 122 wahlweise mit der ihr zugeordneten Regeneratorkammeranschlussstelle 96, 98, 100, 102, 104, 106, 108 der Ausbrandgasleitung 92 verbunden oder von dieser getrennt werden kann. Dabei ermöglicht ein jedes Gasflusssteuerorgan 110, 112, 114, 116, 118, 120, 122 das Einstellen unterschiedlicher Öffnungsquerschnitte für Hindurchtreten von gasförmigem Fluid.

In der Ausbrandgasleitung 92 ist für das Einstellen der Abfuhr von gasförmigem Fluid in aus den Regeneratorkammern 42, 44, 46, 48, 50, 52, 54 der Regeneratoren 30, 32, 34, 36, 38, 40 und 41 ein Ausbrandgassteuerorgan 124 angeordnet. In der RTO-Anlage 26 dient die Ausbrandgasleitung 92 auch zum Aufnehmen von durch die Regeneratorkammern 42, 44, 46, 48, 50, 52, 54 strömendem Spülgas.

Zu bemerken ist, dass bei einer modifizierten Ausführungsform der RTO-Anlage 26 vorgesehen sein kann, dass die Ausbrandgasleitung 92 an einer Anschlussstelle 94' an die Zufuhrleitung 58 für das Zuführen von Rohgas in die Rohgasleitung 60 angeschlossen ist, die sich zwischen einem Gebläse 134' und der Abscheideeinrichtung 90 befindet.

Die Reingasleitung 62 in der RTO-Anlage 26 ist mit dem Kamin 28 verbunden. In der Rohgasleitung 60 ist ein einstellbares Absperrorgan 126 angeordnet, das dazu dient, die Zufuhr von Rohgas in die Regeneratorkammern 42, 44, 46, 48, 50, 52, 54 eines jeden der Regeneratoren 30, 32, 34, 36, 38, 40 und 41 freizugeben oder zu unterbinden. In der RTO-Anlage 26 gibt es eine mit dem Kamin 28 verbundene Rohgasbypassleitung 128, die durch eine auf einer der Abscheideeinrichtung 90 zugewandten Seite des Absperrorgans 126 angeordneten Rohgasleitungsanschlussstelle 130 mit der Rohgasleitung 60 kommuniziert. In der Rohgasleitung 60 gibt es auf einer der Abscheideeinrichtung 90 abgewandten Seite der Rohgasleitungsanschlussstelle 130 für die Rohgasbypassleitung 128 ein Rohgaszufuhrgebläse 132 für das Zuführen von Rohgas an die Regeneratorkammern 42, 44, 46, 48, 50, 52, 54 der Regeneratoren 30, 32, 34, 36, 38, 40 und 41 durch die Rohgasleitung 60, das eine den Regeneratorkammern 42, 44, 46, 48, 50, 52, 54 zugwandte Druckseite hat. In der Rohgasleitung 60 ist auf einer der Abscheideeinrichtung 90 zugewandten Seite der Rohgasleitungsanschlussstelle 130 für die Rohgasbypassleitung 128 ein Rohgasfördergebläse 134 für das Fördern von Rohgas durch die Rohgasleitung 60 aus der Abscheideeinrichtung 90 angeordnet, das eine der Filtereinrichtung zugwandte Saugseite hat.

Die RTO-Anlage 26 enthält eine Steuereinrichtung 136 für das Steuern der Rohgasabsperrorgane 64, 66, 68, 70, 72, 74 und 75 und der Reingasabsperrorgane 76, 78, 80, 82, 84, 86, 88 sowie der Gasflusssteuerorgane 110, 112, 114, 116, 118, 120, 122. Die Steuereinrichtung 136 ermöglicht es, die RTO-Anlage 26 in einem Normalbetriebmodus, in einem Wartungsbetriebmodus und in einem Ausbrandbetriebmodus zu betreiben. Für das Zuführen von Frischluft in die Rohgasleitung 60 gibt es in der RTO-Anlage 26 eine Frischluftleitung 137 mit einem Absperrorgan 139, die an einer Frischluftzufuhranschlussstelle 141 an die Rohgasleitung 60 angeschlossen ist, die sich zwischen dem Rohgaszufuhrgebläse 132 und dem Absperrorgan 126 befindet.

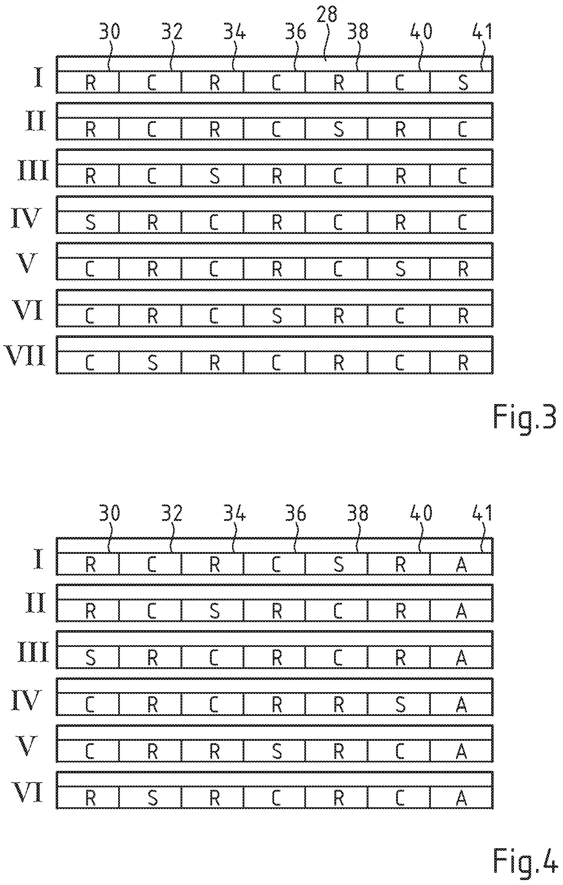

Die Fig. 3 zeigt die Brennkammer 29 mit den Regeneratoren 30, 32, 34, 36, 38, 40 und 41 der RTO-Anlage 26 in aufeinanderfolgenden unterschiedlichen Betriebszuständen I bis VII des Normalbetriebmodus, die z. B. jeweils 1 Minute andauern.

Hier wird den Regeneratorkammern 42, 44, 46, 48, 50, 52, 54 eines ersten, dritten und sechsten Regenerators 30, 32, 34, 36, 38, 40 und 41 jeweils abwechselnd aus der Rohgasleitung 60 Rohgas R zugeführt, Reingas C aus den Regeneratorkammern 42, 44, 46, 48, 50, 52, 54 eines zweiten und vierten und sechsten Regenerators 30, 32, 34, 36, 38, 40 und 41 in die Reingasleitung 62 eingeleitet und aus einer Regeneratorkammer 42, 44, 46, 48, 50, 52, 54 eines siebten der Regeneratoren 30, 32, 34, 36, 38, 40 und 41 Spülgas S in die Ausbrandgasleitung 92 bei einem ersten Öffnungsquerschnitt des der Regeneratorkammer zugeordneten Gasflusssteuerorgans eingeleitet.

In dem Normalbetriebmodus der RTO-Anlage 26 durchströmt das mit Schadstoffen beladene Rohgas so erste vorgewärmte Regeneratoren 30, 32, 34, 36, 38, 40 oder 41 in einer der Regeneratorkammern 42, 44, 46, 48, 50, 52, 54 der RTO-Anlage 26, die mit keramischen Formteilen als Wärmetauscher angefüllt ist. Das hier vorgewärmte Rohgas gelangt dann in die Brennkammer 29 der RTO-Anlage 26, in welcher eine vollständige Oxidation der Schadstoffe erfolgt. Die dabei freiwerdende Verbrennungswärme vermindert die erforderliche Brennerleistung proportional zum Schadstoffgehalt. Dadurch ist ab einer bestimmten Schadstoffkonzentration ein autothermer Betrieb möglich, bei dem keine zusätzliche Energie benötigt wird, um die Temperatur in der Brennkammer 29 auf einem für die Oxidation notwendigen Temperaturniveau zu halten. Das gereinigte, heiße Abgas durchströmt dann als Reingas zweite Regeneratoren 30, 32, 34, 36, 38, 40 oder 41 in der RTO-Anlage 26 und gibt seinen Wärmeinhalt an den Wärmetauscher in den entsprechenden Regeneratorkammern 42, 44, 46, 48, 50, 52, 54 ab, bevor das Reingas über einen Kamin an die Atmosphäre abgegeben wird. Dieser Betriebszustand wird so lange aufrechterhalten, bis die Vorwärmtemperatur der ersten vorgewärmten Regeneratoren 30, 32, 34, 36, 38, 40 oder 41 sinkt. Die Strömungsrichtung wird dann mittels der Steuereinrichtung 136 nach einem festgelegten Zeitintervall umgeschaltet, so dass das ungereinigte Rohgas dann durch die zuletzt vorgewärmten zweiten Regeneratoren 30, 32, 34, 36, 38, 40 oder 41 in die RTO-Anlage 26 strömt und nach der Oxidation den nächsten Regenerator der RTO-Anlage 26 wieder aufwärmt.

Um zu vermeiden, dass beim Umkehren der Strömungsrichtung eine gewisse Menge an Rohgas sofort in die Reingasleitung 62 gelang, enthält die RTO-Anlage 26 einen siebten Regenerator 30, 32, 34, 36, 38, 40 und 41 mit einer Regeneratorkammer 42, 44, 46, 48, 50, 52, 54. Während in die ersten drei Regeneratorkammern Rohgas eintritt und aus den zweiten drei Regeneratorkammern Reingas austritt, wird eine siebte Regeneratorkammer mit Abgas aus der Brennkammer 29 gespült. Damit wird das restliche Rohgas über die Ausbrandgasleitung 92 durch die Abscheideeinrichtung 90 in die Rohgasleitung 60 geschoben. Dann wird diese Regeneratorkammer mit der Reingasleitung 62 verbunden und eine andere siebte Regeneratorkammer mit Abgas aus der Brennkammer 29 gespült etc. Damit wird ein Rohgasschlupf der RTO-Anlage 26 unterbunden oder zumindest weitgehend minimiert.

Bei dem Behandeln der Abgase aus dem Drehrohrofen 18 und dem Kalzinatorwärmetauscherturm 16 in dem Zementwerk 10 in der SCNR-Anlage 24 können sich insbesondere Ammoniumsalze bilden, die im gasförmigen Zustand in die RTO-Anlage gelangen und sich als flüssige und/oder feste Stoffe, insbesondere als ein Schleim in den Wärmetauschern 56 in den Regeneratorkammern 42, 44, 46, 48, 50, 52, 54 niederschlagen. Um zu gewährleisten, dass die Wärmetauscher 56 in den Regeneratorkammern 42, 44, 46, 48, 50, 52, 54 ohne übermäßige Strömungsverluste abwechselnd von Rein- und Rohgas durchströmbar sind, ermöglicht die Steuereinrichtung 136 das Betreiben der RTO-Anlage 26 in einem Ausbrandbetriebsmodus, in dem die Regeneratoren 30, 32, 34, 36, 38, 40 oder 41 einer Pyrolyse unterzogen werden.

In der Fig. 4 ist die Brennkammer 29 mit den Regeneratoren 30, 32, 34, 36, 38, 40 und 41 der RTO-Anlage 26 in aufeinanderfolgenden unterschiedlichen Betriebszuständen I bis VI des Ausbrandbetriebmodus zu sehen, die z. B. jeweils 1 Minute andauern. Hier wird Regeneratorkammern 42, 44, 46, 48, 50, 52, 54 eines ersten, dritten und sechsten Regenerators 30, 32, 34, 36, 38, 40 oder 41 jeweils abwechselnd aus der Rohgasleitung 60 Rohgas R zugeführt, Reingas C aus den Regeneratorkammern 42, 44, 46, 48, 50, 52, 54 eines zweiten und vierten Regenerators 30, 32, 34, 36, 38, 40 oder 41 in die Reingasleitung 62 eingeleitet, aus einer Regeneratorkammer 42, 44, 46, 48, 50, 52, 54 eines fünften der Regeneratoren Spülgas S in die Ausbrandgasleitung 92 bei einem ersten Öffnungsquerschnitt des der Regeneratorkammer 42, 44, 46, 48, 50, 52, 54 zugeordneten Gasflusssteuerorgans 110, 112, 114, 116, 118, 120, 122 eingeleitet und es wird aus einer Regeneratorkammer 42, 44, 46, 48, 50, 52, 54 eines siebten der Regeneratoren 30, 32, 34, 36, 38, 40 und 41 in die Ausbrandgasleitung 92 bei einem gegenüber dem ersten Öffnungsquerschnitt reduzierten zweiten Öffnungsquerschnitt des der Regeneratorkammer 42, 44, 46, 48, 50, 52, 54 zugeordneten Gasflusssteuerorgans Ausbrandgas A in die Ausbrandgasleitung 92 eingeleitet.

Die siebte der Regeneratorkammer 42, 44, 46, 48, 50, 52, 54 wird bei diesem Betrieb aufgeheizt, so dass insbesondere darin als Schleim, Flüssigkeit oder Feststoff niedergeschlagene Ammoniumsalze in die gasförmige Phase übergehen und durch die Ausbrandgasleitung 92 in die Zufuhrleitung 58 für das Zuführen von Rohgas in die Rohgasleitung 60 gelangen, um dann mittels der Abscheideeinrichtung 90 aus dem hierdurch geführten Rohgas abgeschieden zu werden.

Bei diesem Anlagenbetrieb wird also durch drei Regeneratorkammern Rohgas und durch zwei Regeneratorkammern Reingas geführt, was zwar zu einem höheren Druckabfall an der Anlage als bei einem Normalbetreib führt. Die Anzahl von insgesamt 7 Regeneratorkammern 42, 44, 46, 48, 50, 52, 54 stellt hier jedoch sicher, dass die mit dem höheren Druckabfall verbundenen höheren Strömungsgeschwindigkeiten für das Reingas durch die RTO-Anlage 26 nur um 50% größer sind als bei Normalbetrieb der Anlage.

Zu bemerken ist, dass die RTO-Anlage 26 auch so betrieben werden kann, dass durch zwei Regeneratorkammern Rohgas und durch drei Regeneratorkammern Reingas geführt wird.

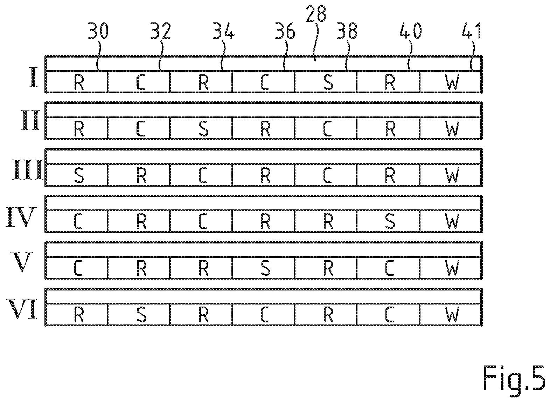

Die Fig. 5 zeigt die Brennkammer 29 mit den Regeneratoren 30, 32, 34, 36, 38, 40 oder 41 der RTO-Anlage 26 in aufeinanderfolgenden unterschiedlichen Betriebszuständen I bis VI des Wartungsbetriebmodus, die z. B. jeweils 1 Minute andauern.

Hier wird den Regeneratorkammern 42, 44, 46, 48, 50, 52, 54 eines ersten, dritten und sechsten Regenerators 30, 32, 34, 36, 38, 40 oder 41 jeweils abwechselnd aus der Rohgasleitung 60 Rohgas R zugeführt und es wird Reingas C aus den Regeneratorkammern 42, 44, 46, 48, 50, 52, 54 eines zweiten und vierten und sechsten Regenerators 30, 32, 34, 36, 38, 40 oder 41 in die Reingasleitung 62 eingeleitet. Demgegenüber wird die Regeneratorkammer des siebten Regenerators 41 von der Rohgasleitung 60, der Ausbrandgasleitung 92 und der Reingasleitung 62 getrennt, so dass sich an dieser Regeneratorkammer Wartungsarbeiten W durchführen lassen.

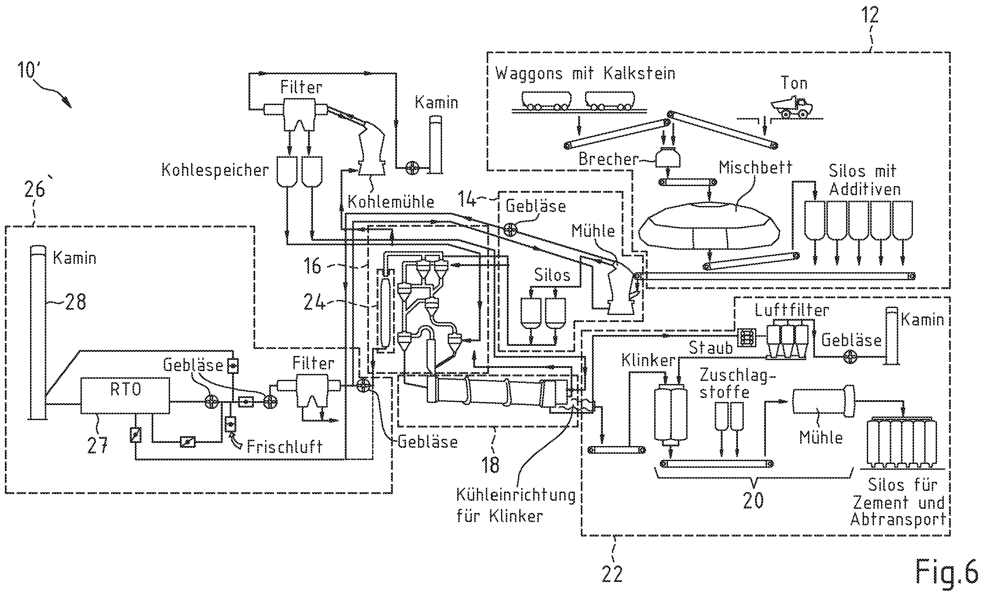

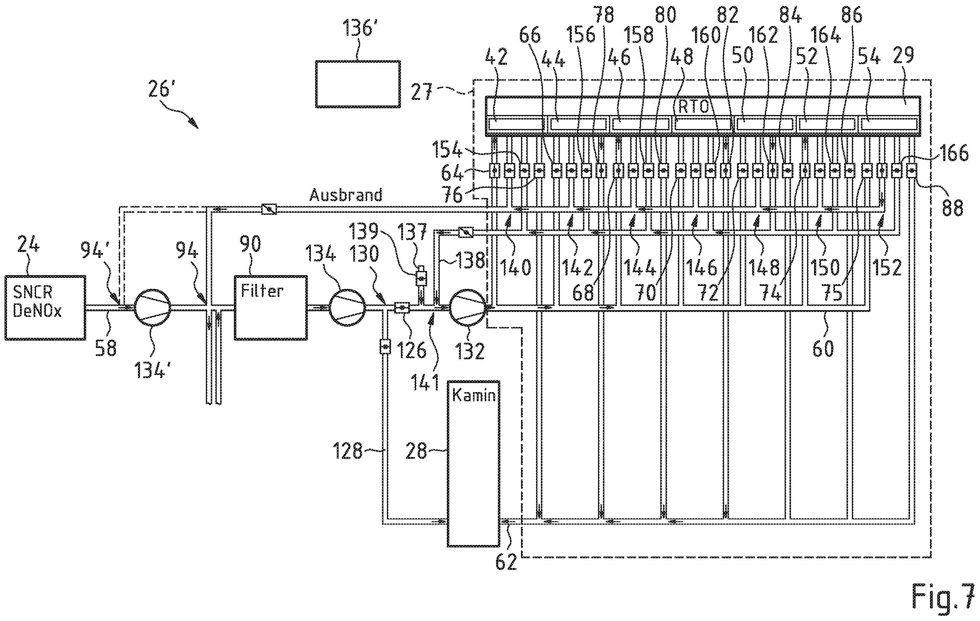

Die Fig. 6 zeigt ein Zementwerk 10' mit einer SNCR-Anlage 24 und mit einer weiteren RTO-Anlage 26'. Die Fig. 7 ist eine Ansicht der weiteren RTO-Anlage 26' in dem Zementwerk 10'. Soweit die Baugruppen und der Fig. 6 den in der Fig. 1 bis Fig. 5 beschriebenen Baugruppen und Elementen entsprechen, sind diese mit den gleichen Zahlen als Bezugszeichen kenntlich gemacht.

In der RTO-Anlage 26' gibt es eine Spülgasleitung 138, die zum Aufnehmen von durch die Regeneratorkammern 42, 44, 46, 48, 50, 52, 54 strömendem Spülgas dient. Die Spülgasleitung 138 weist den unterschiedlichen Regeneratorkammern 42, 44, 46, 48, 50, 52, 54 jeweils zugeordnete Regeneratorkammeranschlussstellen 140, 142, 144, 146, 148, 150 und 152 auf. Die Regeneratorkammer 42, 44, 46, 48, 50, 52, 54 eines jeden der Regeneratoren 30, 32, 34, 36, 38, 40 und 41 ist hier jeweils unabhängig von den Regeneratorkammern 42, 44, 46, 48, 50, 52, 54 der übrigen Regeneratoren 30, 32, 34, 36, 38, 40 und 41 über ein einstellbares Spülgassteuerorgan 154, 156, 158, 160, 162, 164, 166 wahlweise mit der ihr zugeordneten Regeneratorkammeranschlussstelle 140, 142, 144, 146, 148, 150 und 152 der Spülgasleitung verbunden oder von dieser getrennt werden kann.

Das Zementwerk 10' hat eine Steuereinrichtung 136' für das das Steuern der Rohgasabsperrorgane 64, 66, 68, 70, 72, 74, 75 der Reingasabsperrorgane 76, 78, 80, 82, 84, 86, 88 und der Gasflusssteuerorgane 110, 112, 114, 116, 118, 120, 122 sowie der Spülgassteuerorgane 154, 156, 158, 160, 162, 164, 166 in einem Normalbetriebmodus, in einem Wartungsbetriebmodus und in einem Ausbrandbetriebmodus.

In dem Normalbetriebmodus wird den Regeneratorkammern 42, 44, 46, 48, 50, 52, 54 eines ersten, dritten und sechsten Regenerators 30, 32, 34, 36, 38, 40 oder 41, wie vorstehend anhand der Fig. 3 erläutert, jeweils abwechselnd aus der Rohgasleitung 60 Rohgas R zugeführt, Reingas C aus den Regeneratorkammern 42, 44, 46, 48, 50, 52, 54 eines zweiten und vierten und sechsten Regenerators 30, 32, 34, 36, 38, 40 oder 41 in die Reingasleitung 62 eingeleitet und es wird aus einer Regeneratorkammer 42, 44, 46, 48, 50, 52, 54 eines siebten der Regeneratoren 30, 32, 34, 36, 38, 40 oder 41 Spülgas S in die Spülgasleitung 138 eingeleitet.

Demgegenüber wird in dem Ausbrandbetriebsmodus den Regeneratorkammern 42, 44, 46, 48, 50, 52, 54 eines ersten, dritten und sechsten Regenerators 30, 32, 34, 36, 38, 40 oder 41 entsprechend den vorstehenden Ausführungen zu Fig. 4 jeweils abwechselnd aus der Rohgasleitung 60 Rohgas R zugeführt, Reingas C aus den Regeneratorkammern 42, 44, 46, 48, 50, 52, 54 eines zweiten und vierten Regenerators 30, 32, 34, 36, 38, 40 oder 41 in die Reingasleitung 62 eingeleitet, aus einer Regeneratorkammer 42, 44, 46, 48, 50, 52, 54 eines fünften der Regeneratoren Spülgas S in die Spülgasleitung 138 eingeleitet und es wird aus einer Regeneratorkammer 42, 44, 46, 48, 50, 52, 54 eines siebten der Regeneratoren 30, 32, 34, 36, 38, 40 oder 41 in die Ausbrandgasleitung 92 Ausbrandgas A eingeleitet.

Die siebte der Regeneratorkammer 42, 44, 46, 48, 50, 52, 54 wird bei diesem Betrieb aufgeheizt, so dass insbesondere darin als Schleim, Flüssigkeit oder Feststoff niedergeschlagene Ammoniumsalze in die gasförmige Phase übergehen und durch die Ausbrandgasleitung 92 in die Zufuhrleitung 58 für das Zuführen von Rohgas in die Rohgasleitung 60 gelangen, um dann mittels der Abscheideeinrichtung 90 aus dem hierdurch geführten Rohgas abgeschieden zu werden.

Für das Betreiben der RTO-Anlage 26' in einem Wartungsbetriebmodus, wie er vorstehend anhand der Fig. 5 erläutert ist, wird den Regeneratorkammern 42, 44, 46, 48, 50, 52 eines ersten, dritten und sechsten Regenerators 30, 32, 34, 36, 38 oder 40 jeweils abwechselnd aus der Rohgasleitung 60 Rohgas R zugeführt und es wird Reingas C aus den Regeneratorkammern 42, 44, 46, 48, 50, 52 eines zweiten und vierten und sechsten Regenerators 30, 32, 34, 36, 38 oder 40 in die Reingasleitung 62 eingeleitet. Demgegenüber wird die Regeneratorkammer des siebten Regenerators 41 von der Rohgasleitung 60, der Ausbrandgasleitung 92 und der Reingasleitung 62 getrennt, so dass sich an dieser Regeneratorkammer Wartungsarbeiten W durchführen lassen.

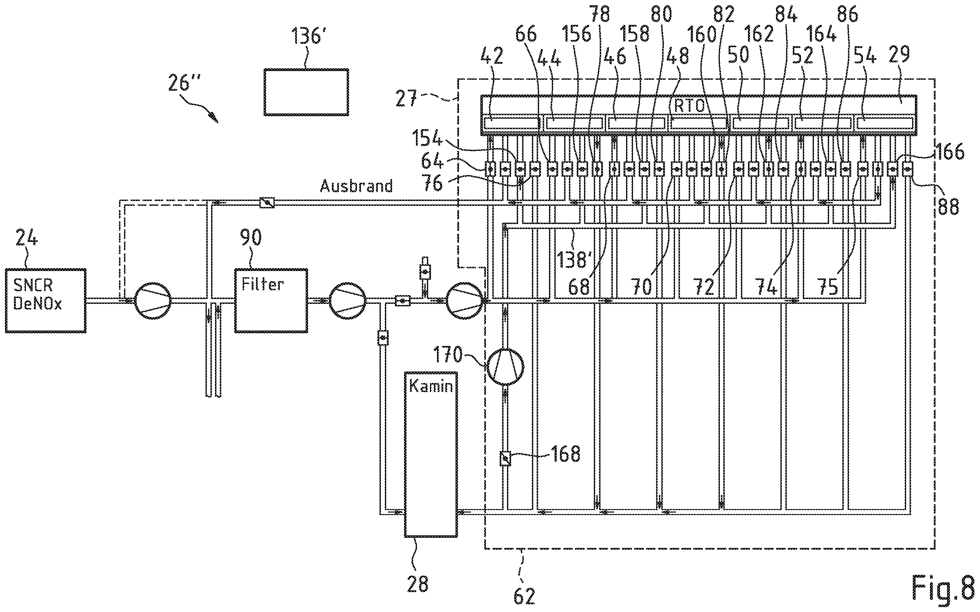

Die Fig. 8 zeigt eine weitere RTO-Anlage 26" für das Reinigen von Rohgas, die wie die vorstehend beschriebene RTO-Anlage 26' insbesondere für das Reinigen von Rohgas in einem Zementwerk eingesetzt werden kann. Soweit die Baugruppen und der Fig. 8 den in der Fig. 7 beschriebenen Baugruppen und Elementen entsprechen, sind diese mit den gleichen Zahlen als Bezugszeichen kenntlich gemacht.

Anders als in der vorstehend anhand der Fig. 7 beschriebenen Anlage 26' gibt es in der Anlage 26" eine mit der Reingasleitung 62 verbundene Spülgasleitung 138', die zum Aufnehmen von durch die Regeneratorkammern 42, 44, 46, 48, 50, 52, 54 strömendem Spülgas dient. Die Spülgasleitung 138' kann hier mittels eines Absperrorgans 168 von der Reingasleitung 62 getrennt werden. **In** der Spülgasleitung ist eine Gebläseeinheit 170 angeordnet, die es ermöglicht, aus der Reingasleitung 62 Reingas anzusaugen und als Spülgas in die Regeneratorkammern 42, 44, 46, 48, 50, 52, 54 einzuleiten.

Zusammenfassend sind zu der Erfindung insbesondere folgende bevorzugte Merkmale festzuhalten: Eine Anlage für die regenerative thermische Oxidation von Rohgas hat eine Brennkammer 29 und weist eine Vielzahl von Regeneratoren 30, 32, 34, 36, 38, 40, 41 auf, die jeweils eine mit der Brennkammer 29 kommunizierende Regeneratorkammer 42, 44, 46, 48, 50, 52, 54 mit einem darin angeordneten Wärmetauscher 56 haben. Die Anlage enthält eine Zufuhrleitung 58 für das Zuführen von Rohgas in eine Rohgasleitung 60 und hat eine Reingasleitung 62 für das Ableiten von Reingas, wobei eine Regeneratorkammer 42, 44, 46, 48, 50, 52, 54 eines Regenerators 30, 32, 34, 36, 38, 40, 41 jeweils unabhängig von den Regeneratorkammern 42, 44, 46, 48, 50, 52, 54 der übrigen Regeneratoren 30, 32, 34, 36, 38, 40, 41 sowohl über ein einstellbares Rohgasabsperrorgan 64, 66, 68, 70, 72, 74, 75 wahlweise an die Rohgasleitung 60 angeschlossen und von der Rohgasleitung 60 getrennt als auch über ein einstellbares Reingasabsperrorgan 76, 78, 80, 82, 84, 86, 88 wahlweise an die Reingasleitung 62 angeschlossen und von der Reingasleitung 62 getrennt werden kann. In der Anlage gibt es eine Abscheideeinrichtung 90 für das Abscheiden von Schwebstoffpartikeln in aus der Zufuhrleitung 58 in die Rohgasleitung 60 zugeführtem Rohgas.

### Bezugszeichenliste

- 10, 10': Zementwerk
- 12: Rohstoffaufbereitungsstufe
- 14: Verarbeitungsstufe
- 16: Kalzinatorwärmetauscherturm
- 18: Drehrohrofen
- 20: Klinkerverarbeitungsstufe
- 22: Endstufe
- 24: SCNR-Anlage
- 26, 26', 26": RTO-Anlage
- 27: Anlagenabschnitt
- 28: Kamin
- 29: Brennkammer
- 30, 32, 34, 36, 38, 40, 41: Regenerator
- 42, 44, 46, 48, 50, 52, 54: Regeneratorkammer
- 56: Wärmetauscher
- 58: Zufuhrleitung
- 60: Rohgasleitung
- 62: Reingasleitung
- 64, 66, 68, 70, 72, 74, 75: Rohgasabsperrorgan
- 76, 78, 80, 82, 84, 86, 88: Reingasabsperrorgan
- 90: Abscheideeinrichtung
- 92: Ausbrandgasleitung
- 94, 94': Anschlussstelle
- 96, 98, 100, 102, 104, 106, 108: Regeneratorkammeranschlussstelle
- 110, 112, 114, 116, 118, 120, 122: Gasflusssteuerorgan
- 124: Ausbrandgassteuerorgan
- 126: Absperrorgan
- 128: Rohgasbypassleitung
- 130: Rohgasleitungsanschlussstelle
- 132: Rohgaszufuhrgebläse
- 134: Rohgasfördergebläse
- 134': Gebläse
- 136, 136': Steuereinrichtung
- 137: Frischluftleitung
- 138, 138': Spülgasleitung
- 139: Absperrorgan
- 141: Frischluftzufuhranschlussstelle
- 140, 142, 144, 146, 148, 150, 152: Regeneratorkammeranschlussstellen
- 154, 156, 158, 160, 162, 164, 166: Spülgassteuerorgan
- 168: Absperrorgan
- 170: Gebläseeinheit
- A: Ausbrandgas
- C: Reingas
- R: Rohgas
- S: Spülgas
- W: Wartungsarbeit

## Patentansprüche

1. Anlage für die regenerative thermische Oxidation von Rohgas mit einer Brennkammer (29) und mit einer Vielzahl von Regeneratoren (30, 32, 34, 36, 38, 40, 41), die jeweils eine mit der Brennkammer (29) kommunizierende Regeneratorkammer (42, 44, 46, 48, 50, 52, 54) mit einem darin angeordneten Wärmetauscher (56) haben, mit einer Zufuhrleitung (58) für das Zuführen von Rohgas in eine Rohgasleitung (60), die durch eine Abscheideeinrichtung (90) mit der Rohgasleitung (60) kommuniziert, wobei die Abscheideeinrichtung (90) für das Abscheiden von Schwebstoffpartikeln in aus der Zufuhrleitung (58) in die Rohgasleitung (60) zugeführtem Rohgas dient, mit einer Reingasleitung (62) für das Ableiten von Reingas, wobei eine Regeneratorkammer (42, 44, 46, 48, 50, 52, 54) eines Regenerators (30, 32, 34, 36, 38, 40, 41) jeweils unabhängig von den Regeneratorkammern (42, 44, 46, 48, 50, 52, 54) der übrigen Regeneratoren (30, 32, 34, 36, 38, 40, 41) sowohl über ein einstellbares Rohgasabsperrorgan (64, 66, 68, 70, 72, 74, 75) wahlweise an die Rohgasleitung (60) angeschlossen und von der Rohgasleitung (60) getrennt als auch über ein einstellbares Reingasabsperrorgan (76, 78, 80, 82, 84, 86, 88) wahlweise an die Reingasleitung (62) angeschlossen und von der Reingasleitung (62) getrennt werden kann, und
mit einer Ausbrandgasleitung (92), die den unterschiedlichen Regeneratorkammern (42, 44, 46, 48, 50, 52, 54) jeweils zugeordnete Regeneratorkammeranschlussstellen (96, 98, 100, 102, 104, 106, 108) aufweist, wobei die Regeneratorkammer (42, 44, 46, 48, 50, 52, 54) eines jeden der Regeneratoren (30, 32, 34, 36, 38, 40, 41) jeweils unabhängig von den Regeneratorkammern (42, 44, 46, 48, 50, 52, 54) der übrigen Regeneratoren (30, 32, 34, 36, 38, 40, 41) über ein einstellbares Gasflusssteuerorgan (110, 112, 114, 116, 118, 120, 122) wahlweise mit der ihr zugeordneten Regeneratorkammeranschlussstelle (96, 98, 100, 102, 104, 106, 108) der Ausbrandgasleitung (92) verbunden oder von dieser getrennt werden kann,
**dadurch gekennzeichnet, dass**
die Ausbrandgasleitung (92) zum Aufnehmen von feststoffhaltigem Ausbrandgas aus den Regeneratorkammern (42, 44, 46, 48, 50, 52, 54) dient und an einer vor der Abscheideeinrichtung (90) angeordneten Anschlussstelle (94, 94') an die Zufuhrleitung (58) angeschlossen ist.

2. Anlage nach Anspruch 1, **dadurch gekennzeichnet, dass** die Abscheideeinrichtung (90) vorzugsweise als ein Filter für das Ausfiltern von Feststoffpartikeln aus einem gasförmigen Fluid ausgelegt ist und/oder dass ein jedes Gasflusssteuerorgan (110, 112, 114, 116, 118, 120, 122) das Einstellen unterschiedlicher Öffnungsquerschnitte für Hindurchtreten von gasförmigem Fluid ermöglicht und/oder dass in der Ausbrandgasleitung (92) für das Einstellen der Abfuhr von gasförmigem Fluid in aus den Regeneratorkammern (42, 44, 46, 48, 50, 52, 54) der Regeneratoren (30, 32, 34, 36, 38, 40, 41) ein Ausbrandgassteuerorgan (124) angeordnet ist.

3. Anlage nach Anspruch 1 oder 2, **dadurch gekennzeichnet, dass** die Ausbrandgasleitung (92) auch zum Aufnehmen von durch die Regeneratorkammern (42, 44, 46, 48, 50, 52, 54) strömendem Spülgas dient.

4. Anlage nach Anspruch 3, **gekennzeichnet durch** eine Steuereinrichtung (136, 136') für das das Steuern der Rohgasabsperrorgane (64, 66, 68, 70, 72, 74, 75) und der Reingasabsperrorgane (76, 78, 80, 82, 84, 86, 88) sowie der Gasflusssteuerorgane (110, 112, 114, 116, 118, 120, 122) in einem Ausbrandbetrieb, in dem über ein definiertes Zeitintervall
i. den Regeneratorkammern (42, 44, 46, 48, 50, 52, 54) eines ersten, dritten und sechsten Regenerators der Regeneratoren (30, 32, 34, 36, 38, 40, 41) aus der Rohgasleitung (60) Rohgas zugeführt,
ii. Reingas aus den Regeneratorkammern (42, 44, 46, 48, 50, 52, 54) eines zweiten und vierten Regenerators der Regeneratoren (30, 32, 34, 36, 38, 40, 41) in die Reingasleitung (62) eingeleitet,
iii. aus einer Regeneratorkammer (42, 44, 46, 48, 50, 52, 54) eines fünften der Regeneratoren (30, 32, 34, 36, 38, 40, 41) Spülgas in die Ausbrandgasleitung (92) bei einem ersten Öffnungsquerschnitt des der Regeneratorkammer (42, 44, 46, 48, 50, 52, 54) zugeordneten Gasflusssteuerorgans (110, 112, 114, 116, 118, 120, 122) eingeleitet; und
iv. aus einer Regeneratorkammer (42, 44, 46, 48, 50, 52, 54) eines siebten der Regeneratoren (30, 32, 34, 36, 38, 40, 41) in die Ausbrandgasleitung (92) bei einem gegenüber dem ersten Öffnungsquerschnitt reduzierten zweiten Öffnungsquerschnitt des der Regeneratorkammer (42, 44, 46, 48, 50, 52, 54) zugeordneten Gasflusssteuerorgans (110, 112, 114, 116, 118, 120, 122) Ausbrandgas in die Ausbrandgasleitung (92) eingeleitet wird;
oder
v. den Regeneratorkammern (42, 44, 46, 48, 50, 52, 54) eines ersten, und dritten Regenerators der Regeneratoren (30, 32, 34, 36, 38, 40, 41) aus der Rohgasleitung (60) Rohgas zugeführt,
vi. Reingas aus den Regeneratorkammern (42, 44, 46, 48, 50, 52, 54) eines zweiten, vierten und sechsten Regenerators der Regeneratoren (30, 32, 34, 36, 38, 40, 41) in die Reingasleitung (62) eingeleitet,
vii. aus einer Regeneratorkammer (42, 44, 46, 48, 50, 52, 54) eines fünften der Regeneratoren (30, 32, 34, 36, 38, 40, 41) Spülgas in die Ausbrandgasleitung (92) bei einem ersten Öffnungsquerschnitt des der Regeneratorkammer (42, 44, 46, 48, 50, 52, 54) zugeordneten Gasflusssteuerorgans (110, 112, 114, 116, 118, 120, 122) eingeleitet; und
viii. aus einer Regeneratorkammer (42, 44, 46, 48, 50, 52, 54) eines siebten der Regeneratoren (30, 32, 34, 36, 38, 40, 41) in die Ausbrandgasleitung (92) bei einem gegenüber dem ersten Öffnungsquerschnitt reduzierten zweiten Öffnungsquerschnitt des der Regeneratorkammer (42, 44, 46, 48, 50, 52, 54) zugeordneten Gasflusssteuerorgans (110, 112, 114, 116, 118, 120, 122) Ausbrandgas in die Ausbrandgasleitung (92) eingeleitet wird.

5. Anlage nach Anspruch 4, **dadurch gekennzeichnet, dass** die Steuereinrichtung (136, 136') für das das Steuern der Rohgasabsperrorgane (64, 66, 68, 70, 72, 74, 75) und der Reingasabsperrorgane (76, 78, 80, 82, 84, 86, 88) sowie der Gasflusssteuerorgane (110, 112, 114, 116, 118, 120, 122) für einen Normalbetrieb ausgelegt ist, bei dem
i. den Regeneratorkammern (42, 44, 46, 48, 50, 52, 54) eines ersten, dritten und sechsten Regenerators der Regeneratoren (30, 32, 34, 36, 38, 40, 41) aus der Rohgasleitung (60) Rohgas zugeführt,
ii. Reingas aus den Regeneratorkammern (42, 44, 46, 48, 50, 52, 54) eines zweiten und vierten und sechsten Regenerators der Regeneratoren (30, 32, 34, 36, 38, 40, 41) in die Reingasleitung (62) eingeleitet, und
iii. aus einer Regeneratorkammer (42, 44, 46, 48, 50, 52, 54) eines siebten der Regeneratoren (30, 32, 34, 36, 38, 40, 41) Spülgas in die Ausbrandgasleitung (92) bei einem ersten Öffnungsquerschnitt des der Regeneratorkammer (42, 44, 46, 48, 50, 52, 54) zugeordneten Gasflusssteuerorgans (110, 112, 114, 116, 118, 120, 122) eingeleitet wird.

6. Anlage nach Anspruch 4 oder 5, **dadurch gekennzeichnet, dass** in sechs aufeinanderfolgenden Zeitintervallen der fünfte der Regeneratoren (30, 32, 34, 36, 38, 40, 41) jeweils unterschiedlich und der siebte der Regeneratoren (30, 32, 34, 36, 38, 40, 41) jeweils identisch ist.

7. Anlage nach Anspruch 6, **dadurch gekennzeichnet, dass** der siebte der Regeneratoren (30, 32, 34, 36, 38, 40, 41) bevorzugt in sieben aufeinanderfolgenden Zeitintervallen jeweils unterschiedlich ist.

8. Anlage nach einem der Ansprüche 1 oder 2, **gekennzeichnet durch** eine Spülgasleitung (138, 138'), die zum Aufnehmen von durch die Regeneratorkammern (42, 44, 46, 48, 50, 52, 54) strömendem Spülgas dient, wobei die Spülgasleitung (138, 138') den unterschiedlichen Regeneratorkammern (42, 44, 46, 48, 50, 52, 54) jeweils zugeordnete Regeneratorkammeranschlussstellen (96, 98, 100, 102, 104, 106, 108) aufweist und wobei die Regeneratorkammer (42, 44, 46, 48, 50, 52, 54) eines jeden der Regeneratoren (30, 32, 34, 36, 38, 40, 41) jeweils unabhängig von den Regeneratorkammern (42, 44, 46, 48, 50, 52, 54) der übrigen Regeneratoren (30, 32, 34, 36, 38, 40, 41) über ein einstellbares Spülgassteuerorgan (154, 156, 158, 160, 162, 164, 166) wahlweise mit der ihr zugeordneten Regeneratorkammeranschlussstelle (140, 142, 144, 146, 148, 150, 152) der Spülgasleitung (138, 138') verbunden oder von dieser getrennt werden kann.

9. Anlage nach einem der Ansprüche 1 oder 2, **gekennzeichnet durch**
eine an die Rohgasleitung angeschlossene Spülgasleitung (138),
die bei einem Spülen der Regeneratorkammern zum Aufnehmen von durch die Regeneratorkammern (42, 44, 46, 48, 50, 52, 54) in die Rohgasleitung (60) strömenden Spülgas dient, um in der Regeneratorkammer angesammeltes Rohgas der Rohgasleitung wieder zuzuführen, wobei die Spülgasleitung (138) den unterschiedlichen Regeneratorkammern (42, 44, 46, 48, 50, 52, 54) jeweils zugeordnete Regeneratorkammeranschlussstellen (96, 98, 100, 102, 104, 106, 108) aufweist und wobei die Regeneratorkammer (42, 44, 46, 48, 50, 52, 54) eines jeden der Regeneratoren (30, 32, 34, 36, 38, 40, 41) jeweils unabhängig von den Regeneratorkammern (42, 44, 46, 48, 50, 52, 54) der übrigen Regeneratoren (30, 32, 34, 36, 38, 40, 41) über ein einstellbares Spülgassteuerorgan (154, 156, 158, 160, 162, 164, 166) wahlweise mit der ihr zugeordneten Regeneratorkammeranschlussstelle (140, 142, 144, 146, 148, 150, 152) der Spülgasleitung (138, 138') verbunden oder von dieser getrennt werden kann.

10. Anlage nach Anspruch 9, **dadurch gekennzeichnet, dass** das Spülgassteuerorgan (154, 156, 158, 160, 162, 164, 166) in der Spülgasleitung (138) angeordnet ist.

11. Anlage nach einem der Ansprüche 1 oder 2, **gekennzeichnet durch**
eine mit der Reingasleitung (62) verbundene Spülgasleitung (138'), die zum Aufnehmen von aus der Reingasleitung (62) durch die Regeneratorkammern (42, 44, 46, 48, 50, 52, 54) strömendem Spülgas bei einem Spülen der Regeneratorkammern dient, um in einer Regeneratorkammer (42, 44, 46, 48, 50, 52, 54) angesammeltes Rohgas in die Brennkammer zu spülen,
wobei die Spülgasleitung (138') den unterschiedlichen Regeneratorkammern (42, 44, 46, 48, 50, 52, 54) jeweils zugeordnete Regeneratorkammeranschlussstellen (96, 98, 100, 102, 104, 106, 108) aufweist und wobei die Regeneratorkammer (42, 44, 46, 48, 50, 52, 54) eines jeden der Regeneratoren (30, 32, 34, 36, 38, 40, 41) jeweils unabhängig von den Regeneratorkammern (42, 44, 46, 48, 50, 52, 54) der übrigen Regeneratoren (30, 32, 34, 36, 38, 40, 41) über ein einstellbares Spülgassteuerorgan (154, 156, 158, 160, 162, 164, 166) wahlweise mit der ihr zugeordneten Regeneratorkammeranschlussstelle (140, 142, 144, 146, 148, 150, 152) der Spülgasleitung (138, 138') verbunden oder von dieser getrennt werden kann.

12. Anlage nach Anspruch 11, **dadurch gekennzeichnet, dass** in der Spülgasleitung (138') ein Gebläse angeordnet ist.

13. Anlage nach einem der Ansprüche 8 bis 12, **gekennzeichnet durch** eine Steuereinrichtung (136, 136') für das das Steuern der Rohgasabsperrorgane (64, 66, 68, 70, 72, 74, 75), der Reingasabsperrorgane (76, 78, 80, 82, 84, 86, 88) und der Gasflusssteuerorgane (110, 112, 114, 116, 118, 120, 122) sowie der Spülgassteuerorgane (154, 156, 158, 160, 162, 164, 166) in einem Ausbrandbetrieb, in dem über ein definiertes Zeitintervall
i. den Regeneratorkammern (42, 44, 46, 48, 50, 52, 54) eines ersten, dritten und sechsten Regenerators der Regeneratoren (30, 32, 34, 36, 38, 40, 41) aus der Rohgasleitung (60) Rohgas zugeführt,
ii. Reingas aus den Regeneratorkammern (42, 44, 46, 48, 50, 52, 54) eines zweiten und vierten Regenerators der Regeneratoren (30, 32, 34, 36, 38, 40, 41) in die Reingasleitung (62) eingeleitet,
iii. aus einer Regeneratorkammer (42, 44, 46, 48, 50, 52, 54) eines fünften der Regeneratoren (30, 32, 34, 36, 38, 40, 41) Spülgas in die Spülgasleitung (138, 138') bei einem ersten Öffnungsquerschnitt des der Regeneratorkammer (42, 44, 46, 48, 50, 52, 54) zugeordneten Spülgassteuerorgans (154, 156, 158, 160, 162, 164, 166) eingeleitet; und
iv. aus einer Regeneratorkammer (42, 44, 46, 48, 50, 52, 54) eines siebten der Regeneratoren (30, 32, 34, 36, 38, 40, 41) in die Ausbrandgasleitung (92) bei einem gegenüber dem ersten Öffnungsquerschnitt reduzierten zweiten Öffnungsquerschnitt des der Regeneratorkammer (42, 44, 46, 48, 50, 52, 54) zugeordneten Gasflusssteuerorgans (110, 112, 114, 116, 118, 120, 122) Ausbrandgas in die Ausbrandgasleitung (92) eingeleitet wird;
oder
i. den Regeneratorkammern (42, 44, 46, 48, 50, 52, 54) eines ersten und dritten Regenerators der Regeneratoren (30, 32, 34, 36, 38, 40, 41) aus der Rohgasleitung (60) Rohgas zugeführt,
ii. Reingas aus den Regeneratorkammern (42, 44, 46, 48, 50, 52, 54) eines zweiten, vierten und sechsten Regenerators der Regeneratoren (30, 32, 34, 36, 38, 40, 41) in die Reingasleitung (62) eingeleitet,
iii. aus einer Regeneratorkammer (42, 44, 46, 48, 50, 52, 54) eines fünften der Regeneratoren (30, 32, 34, 36, 38, 40, 41) Spülgas in die Spülgasleitung (138, 138') bei einem ersten Öffnungsquerschnitt des der Regeneratorkammer (42, 44, 46, 48, 50, 52, 54) zugeordneten Spülgassteuerorgans (154, 156, 158, 160, 162, 164, 166) eingeleitet; und
iv. aus einer Regeneratorkammer (42, 44, 46, 48, 50, 52, 54) eines siebten der Regeneratoren (30, 32, 34, 36, 38, 40, 41) in die Ausbrandgasleitung (92) bei einem gegenüber dem ersten Öffnungsquerschnitt reduzierten zweiten Öffnungsquerschnitt des der Regeneratorkammer (42, 44, 46, 48, 50, 52, 54) zugeordneten Gasflusssteuerorgans (110, 112, 114, 116, 118, 120, 122) Ausbrandgas in die Ausbrandgasleitung (92) eingeleitet wird.

14. Anlage nach Anspruch 13, **dadurch gekennzeichnet, dass** die Steuereinrichtung (136, 136') für das Steuern der Rohgasabsperrorgane (64, 66, 68, 70, 72, 74, 75) und der Reingasabsperrorgane (76, 78, 80, 82, 84, 86, 88) sowie der Spülgassteuerorgane (154, 156, 158, 160, 162, 164, 166) in einem Wartungsbetrieb dient, in dem über ein definiertes Zeitintervall
i. den Regeneratorkammern (42, 44, 46, 48, 50, 52, 54) eines ersten, dritten und sechsten Regenerators der Regeneratoren (30, 32, 34, 36, 38, 40, 41) aus der Rohgasleitung (60) Rohgas zugeführt,
ii. Reingas aus den Regeneratorkammern (42, 44, 46, 48, 50, 52, 54) eines zweiten und vierten Regenerators der Regeneratoren (30, 32, 34, 36, 38, 40, 41) in die Reingasleitung (62) eingeleitet, und
iii. die Regeneratorkammer (42, 44, 46, 48, 50, 52, 54) eines siebten der Regeneratoren (30, 32, 34, 36, 38, 40, 41) von der Rohgasleitung (60) und von der Reingasleitung (62) sowie von der Spülgasleitung (138, 138') getrennt wird.

15. Anlage nach Anspruch 13 oder 14, **dadurch gekennzeichnet, dass** in sechs aufeinanderfolgenden Zeitintervallen der fünfte der Regeneratoren (30, 32, 34, 36, 38, 40, 41) unterschiedlich und der siebte der Regeneratoren (30, 32, 34, 36, 38, 40, 41) identisch ist, wobei vorzugsweise der siebte der Regeneratoren (30, 32, 34, 36, 38, 40, 41) in sieben aufeinanderfolgenden Zeitintervallen unterschiedlich ist.

16. Anlage nach einem der Ansprüche 8 bis 15, **dadurch gekennzeichnet, dass** ein jedes Spülgassteuerorgan (154, 156, 158, 160, 162, 164, 166) das Einstellen unterschiedlicher Öffnungsquerschnitte für Hindurchtreten von Spülgas ermöglicht.

17. Anlage nach einem der Ansprüche 1 bis 16,
**dadurch gekennzeichnet,**
**dass** in der Rohgasleitung (60) ein einstellbares Absperrorgan (126) angeordnet ist, das dazu dient, die Zufuhr von Rohgas in die Regeneratorkammern (42, 44, 46, 48, 50, 52, 54) freizugeben oder zu unterbinden.

18. Anlage nach Anspruch 17,
**gekennzeichnet durch** eine mit einem Kamin
(28) verbundene Rohgasbypassleitung (128), die auf einer der Filtereinrichtung zugewandten Seite des Absperrorgans (126) angeordneten Rohgasleitungsanschlussstelle (130) mit der Rohgasleitung (60) kommuniziert.

19. Anlage nach Anspruch 18, **dadurch gekennzeichnet, dass** in der Rohgasleitung (60) auf einer der Filtereinrichtung abgewandten Seite der Rohgasleitungsanschlussstelle (130) für die Rohgasbypassleitung (128) ein Rohgaszufuhrgebläse (132) für das Zuführen von Rohgas an die Regeneratorkammern (42, 44, 46, 48, 50, 52, 54) der Regeneratoren (30, 32, 34, 36, 38, 40, 41) durch die Rohgasleitung (60) angeordnet ist, das eine den Regeneratorkammern (42, 44, 46, 48, 50, 52, 54) zugwandte Druckseite hat, wobei die Spülgasleitung (138, 138') bevorzugt zwischen dem Rohgaszufuhrgebläse (132) und dem Absperrorgan (126) an die Rohgasleitung (60) angeschlossen ist.

20. Anlage nach Anspruch 18 oder 19, **dadurch gekennzeichnet, dass** in der Rohgasleitung (60) auf einer der Filtereinrichtung zugewandten Seite der Rohgasleitungsanschlussstelle (130) für die Rohgasbypassleitung (128) ein Rohgasfördergebläse (134) für das Fördern von Rohgas durch die Rohgasleitung (60) aus der Filtereinrichtung angeordnet ist, das eine der Filtereinrichtung zugwandte Saugseite hat.

21. Anlage nach einem der Ansprüche 1 bis 20, **gekennzeichnet durch** wenigstens sieben Regeneratorkammern (42, 44, 46, 48, 50, 52, 54).

22. Verwendung einer Anlage nach einem der Ansprüche 1 bis 21 für die regenerative thermische Oxidation von Rohgas mit Stickoxiden.

23. Zementwerk (10, 10') mit einer Anlage gemäß einem der Ansprüche 1 bis 21.

24. Verfahren zum Betrieb einer Anlage für das Behandeln von Rohgas mittels regenerativer thermischer Oxidation, wobei die Anlage eine Brennkammer (29) und eine Vielzahl von Regeneratoren (30, 32, 34, 36, 38, 40, 41) aufweist, die mit der Brennkammer (29) kommunizieren und die jeweils eine Regeneratorkammer (42, 44, 46, 48, 50, 52, 54) mit einem darin angeordneten Wärmetauscher (56) haben, bei dem abwechselnd wenigstens einer der Regeneratoren (30, 32, 34, 36, 38, 40, 41) mit Spülgas gespült wird, wenigstens zwei der Regeneratoren (30, 32, 34, 36, 38, 40, 41) Rohgas zugeführt, aus der Regeneratorkammer (42, 44, 46, 48, 50, 52, 54) wenigstens zwei der Regeneratoren (30, 32, 34, 36, 38, 40, 41) Reingas abgeleitet und die Regeneratorkammer (42, 44, 46, 48, 50, 52, 54) wenigstens eines der Regeneratoren (30, 32, 34, 36, 38, 40, 41) in einem Ausbrandbetrieb gefahren wird,
**dadurch gekennzeichnet, dass**
das beim Ausbrandbetrieb der Regeneratorkammer (42, 44, 46, 48, 50, 52, 54) des wenigstens einen Regenerators (30, 32, 34, 36, 38, 40, 41) freigesetzte Ausbrandgas in das zu behandelnden Rohgas zurückgeführt wird und mit dem Rohgas vor dem Zuführen an die Regeneratoren (30, 32, 34, 36, 38, 40, 41) gefiltert wird.

## Claims

1. System for regenerative thermal oxidation of crude gas, the system comprising a combustion chamber (29) and a plurality of regenerators (30, 32, 34, 36, 38, 40, 41), which each have a regenerator chamber (42, 44, 46, 48, 50, 52, 54) that communicates with the combustion chamber (29) and contains a heat exchanger (56), the system comprising a feed line (58) for feeding crude gas into a crude gas line (60), the feed line (58) communicating with the crude gas line (60) through a separation device (90), the separating device (90) separating suspended particles in crude gas fed into the crude gas line (60) from the feed line (58),
the system comprising a clean gas line (62) for discharging clean gas, a regenerator chamber (42, 44, 46, 48, 50, 52, 54) of a regenerator (30, 32, 34, 36, 38, 40, 41), independently of the regenerator chambers (42, 44, 46, 48, 50, 52, 54) of the rest of the regenerators (30, 32, 34, 36, 38, 40, 41), being able to be optionally connected to the crude gas line (60) and separated from the crude gas line (60) via an adjustable crude gas shut-off element (64, 66, 68, 70, 72, 74, 75), as well as optionally connected to the clean gas line (62) and separated from the clean gas line (62) via an adjustable clean gas shut-off element (76, 78, 80, 82, 84, 86, 88), and
the system comprising a burnout gas line (92) which has regenerator chamber connection points (96, 98, 100, 102, 104, 106, 108) which are each associated with the different regenerator chambers (42, 44, 46, 48, 50, 52, 54), the regenerator chamber (42, 44, 46, 48, 50, 52, 54) of each of the regenerators (30, 32, 34, 36, 38, 40, 41), independently of the regenerator chambers (42, 44, 46, 48, 50, 52, 54) of the rest of the regenerators (30, 32, 34, 36, 38, 40, 41), being able to be optionally connected to or separated from the associated regenerator chamber connection point (96, 98, 100, 102, 104, 106, 108) of the burnout gas line (92) via an adjustable gas flow control element (110, 112, 114, 116, 118, 120, 122),
**characterized in that**
the burnout gas line (92) receives burnout gas containing solids from the regenerator chambers (42, 44, 46, 48, 50, 52, 54) and is connected to the feed line (58) at a connection point (94, 94') arranged upstream of the separating device (90).

2. System according to claim 1, **characterized in that** the separating device (90) is preferably designed as a filter for filtering out solid particles from a gaseous fluid **and/or in that** each gas flow control element (110, 112, 114, 116, 118, 120, 122) makes it possible to adjust different opening cross-sections for the passage of gaseous fluid **and/or in that** a burnout gas control element (124) is arranged in the burnout gas line (92) for adjusting the discharge of gaseous fluid from the regenerator chambers (42, 44, 46, 48, 50, 52, 54) of the regenerators (30, 32, 34, 36, 38, 40, 41).

3. System according to either claim 1 or claim 2, **characterized in that** the burnout gas line (92) also receives purge gas flowing through the regenerator chambers (42, 44, 46, 48, 50, 52, 54).

4. System according to claim 3, **characterized by** a control device (136, 136') for controlling the crude gas shut-off elements (64, 66, 68, 70, 72, 74, 75) and the clean gas shut-off elements (76, 78, 80, 82, 84, 86, 88) as well as the gas flow control elements (110, 112, 114, 116, 118, 120, 122) in a burnout operation, in which over a defined time interval
i. crude gas is fed to the regenerator chambers (42, 44, 46, 48, 50, 52, 54) of a first, third and sixth regenerator of the regenerators (30, 32, 34, 36, 38, 40, 41) from the crude gas line (60),
ii. clean gas is introduced into the clean gas line (62) from the regenerator chambers (42, 44, 46, 48, 50, 52, 54) of a second and fourth regenerator of the regenerators (30, 32, 34, 36, 38, 40, 41),
iii. purge gas is introduced into the burnout gas line (92) from a regenerator chamber (42, 44, 46, 48, 50, 52, 54) of a fifth of the regenerators (30, 32, 34, 36, 38, 40, 41) at a first opening cross-section of the gas flow control element (110, 112, 114, 116, 118, 120, 122) associated with the regenerator chamber (42, 44, 46, 48, 50, 52, 54); and
iv. burnout gas is introduced into the burnout gas line (92) from a regenerator chamber (42, 44, 46, 48, 50, 52, 54) of a seventh of the regenerators (30, 32, 34, 36, 38, 40, 41) into the burnout gas line (92) at a second opening cross-section of the gas flow control element (110, 112, 114, 116, 118, 120, 122), associated with the regenerator chamber (42, 44, 46, 48, 50, 52, 54), which second opening cross-section is reduced with respect to the first opening cross-section;
or
v. crude gas is fed to the regenerator chambers (42, 44, 46, 48, 50, 52, 54) of a first and third regenerator of the regenerators (30, 32, 34, 36, 38, 40, 41) from the crude gas line (60),
vi. clean gas is introduced into the clean gas line (62) from the regenerator chambers (42, 44, 46, 48, 50, 52, 54) of a second, fourth, and sixth regenerator of the regenerators (30, 32, 34, 36, 38, 40, 41),
vii. purge gas is introduced into the burnout gas line (92) from a regenerator chamber (42, 44, 46, 48, 50, 52, 54) of a fifth of the regenerators (30, 32, 34, 36, 38, 40, 41) at a first opening cross-section of the gas flow control element (110, 112, 114, 116, 118, 120, 122) associated with the regenerator chamber (42, 44, 46, 48, 50, 52, 54); and
viii. burnout gas is introduced into the burnout gas line (92) from a regenerator chamber (42, 44, 46, 48, 50, 52, 54) of a seventh of the regenerators (30, 32, 34, 36, 38, 40, 41) into the burnout gas line (92) at a second opening cross-section of the gas flow control element (110, 112, 114, 116, 118, 120, 122), associated with the regenerator chamber (42, 44, 46, 48, 50, 52, 54), which second opening cross-section is reduced with respect to the first opening cross-section.

5. System according to claim 4, **characterized in that** the control device (136, 136') is designed for controlling the crude gas shut-off elements (64, 66, 68, 70, 72, 74, 75) and the clean gas shut-off elements (76, 78, 80, 82, 84, 86, 88) as well as the gas flow control elements (110, 112, 114, 116, 118, 120, 122) for normal operation, in which
i. crude gas is fed to the regenerator chambers (42, 44, 46, 48, 50, 52, 54) of a first, third and sixth regenerator of the regenerators (30, 32, 34, 36, 38, 40, 41) from the crude gas line (60),
ii. clean gas is introduced into the clean gas line (62) from the regenerator chambers (42, 44, 46, 48, 50, 52, 54) of a second and fourth and sixth regenerator of the regenerators (30, 32, 34, 36, 38, 40, 41), and
iii. purge gas is introduced into the burnout gas line (92) from a regenerator chamber (42, 44, 46, 48, 50, 52, 54) of a seventh of the regenerators (30, 32, 34, 36, 38, 40, 41) at a first opening cross-section of the gas flow control element (110, 112, 114, 116, 118, 120, 122) associated with the regenerator chamber (42, 44, 46, 48, 50, 52, 54).

6. System according to either claim 4 or claim 5, **characterized in that** in six consecutive time intervals, the fifth of the regenerators (30, 32, 34, 36, 38, 40, 41) is different in each case and the seventh of the regenerators (30, 32, 34, 36, 38, 40, 41) is identical in each case.

7. System according to claim 6, **characterized in that** the seventh of the regenerators (30, 32, 34, 36, 38, 40, 41) is preferably different in each of seven successive time intervals.

8. System according to either claim 1 or claim 2, **characterized by** a purge gas line (138, 138') for receiving purge gas flowing through the regenerator chambers (42, 44, 46, 48, 50, 52, 54), the purge gas line (138, 138') having regenerator chamber connection points (96, 98, 100, 102, 104, 106, 108) which are each associated with the different regenerator chambers (42, 44, 46, 48, 50, 52, 54), and the regenerator chamber (42, 44, 46, 48, 50, 52, 54) of each of the regenerators (30, 32, 34, 36, 38, 40, 41), independently of the regenerator chambers (42, 44, 46, 48, 50, 52, 54) of the rest of the regenerators (30, 32, 34, 36, 38, 40, 41), being able to be optionally connected to or separated from the associated regenerator chamber connection point (140, 142, 144, 146, 148, 150, 152) of the purge gas line (138, 138') via an adjustable purge gas control element (154, 156, 158, 160, 162, 164, 166).

9. System according to either claim 1 or claim 2, **characterized by**
a purge gas line (138) which is connected to the crude gas line
and which, during purging of the regenerator chambers, receives purge gas flowing through the regenerator chambers (42, 44, 46, 48, 50, 52, 54) into the crude gas line (60) in order to feed crude gas accumulated in the regenerator chamber back into the crude gas line,
the purge gas line (138) having regenerator chamber connection points (96, 98, 100, 102, 104, 106, 108) which are each associated with the different regenerator chambers (42, 44, 46, 48, 50, 52, 54), and the regenerator chamber (42, 44, 46, 48, 50, 52, 54) of each of the regenerators (30, 32, 34, 36, 38, 40, 41), independently of the regenerator chambers (42, 44, 46, 48, 50, 52, 54) of the rest of the regenerators (30, 32, 34, 36, 38, 40, 41), being able to be optionally connected to or separated from the associated regenerator chamber connection point (140, 142, 144, 146, 148, 150, 152) of the purge gas line (138, 138') via an adjustable purge gas control element (154, 156, 158, 160, 162, 164, 166).

10. System according to claim 9, **characterized in that** the purge gas control element (154, 156, 158, 160, 162, 164, 166) is arranged in the purge gas line (138).

11. System according to either claim 1 or claim 2, **characterized by**
a purge gas line (138') connected to the clean gas line (62) for receiving purge gas flowing from the clean gas line (62) through the regenerator chambers (42, 44, 46, 48, 50, 52, 54) during purging of the regenerator chambers in order to purge crude gas accumulated in a regenerator chamber (42, 44, 46, 48, 50, 52, 54) into the combustion chamber,
the purge gas line (138') having regenerator chamber connection points (96, 98, 100, 102, 104, 106, 108) which are each associated with the different regenerator chambers (42, 44, 46, 48, 50, 52, 54), and the regenerator chamber (42, 44, 46, 48, 50, 52, 54) of each of the regenerators (30, 32, 34, 36, 38, 40, 41), independently of the regenerator chambers (42, 44, 46, 48, 50, 52, 54) of the rest of the regenerators (30, 32, 34, 36, 38, 40, 41), being able to be optionally connected to or separated from the associated regenerator chamber connection point (140, 142, 144, 146, 148, 150, 152) of the purge gas line (138, 138') via an adjustable purge gas control element (154, 156, 158, 160, 162, 164, 166).

12. System according to claim 11, **characterized in that** a fan is arranged in the purge gas line (138').

13. System according to any of claims 8 to 12, **characterized by** a control device (136, 136') for controlling the crude gas shut-off elements (64, 66, 68, 70, 72, 74, 75), the clean gas shut-off elements (76, 78, 80, 82, 84, 86, 88) and the gas flow control elements (110, 112, 114, 116, 118, 120, 122) as well as the purge gas control elements (154, 156, 158, 160, 162, 164, 166) in a burnout operation, in which over a defined time interval
i. crude gas is fed to the regenerator chambers (42, 44, 46, 48, 50, 52, 54) of a first, third and sixth regenerator of the regenerators (30, 32, 34, 36, 38, 40, 41) from the crude gas line (60),
ii. clean gas is introduced into the clean gas line (62) from the regenerator chambers (42, 44, 46, 48, 50, 52, 54) of a second and fourth regenerator of the regenerators (30, 32, 34, 36, 38, 40, 41),
iii. purge gas is introduced into the purge gas line (138, 138') from a regenerator chamber (42, 44, 46, 48, 50, 52, 54) of a fifth of the regenerators (30, 32, 34, 36, 38, 40, 41) at a first opening cross-section of the purge gas control element (154, 156, 158, 160, 162, 164, 166) associated with the regenerator chamber (42, 44, 46, 48, 50, 52, 54); and
iv. burnout gas is introduced into the burnout gas line (92) from a regenerator chamber (42, 44, 46, 48, 50, 52, 54) of a seventh of the regenerators (30, 32, 34, 36, 38, 40, 41) into the burnout gas line (92) at a second opening cross-section of the gas flow control element (110, 112, 114, 116, 118, 120, 122), associated with the regenerator chamber (42, 44, 46, 48, 50, 52, 54), which second opening cross-section is reduced with respect to the first opening cross-section;
or
i. crude gas is fed to the regenerator chambers (42, 44, 46, 48, 50, 52, 54) of a first and third regenerator of the regenerators (30, 32, 34, 36, 38, 40, 41) from the crude gas line (60),
ii. clean gas is introduced into the clean gas line (62) from the regenerator chambers (42, 44, 46, 48, 50, 52, 54) of a second, fourth, and sixth regenerator of the regenerators (30, 32, 34, 36, 38, 40, 41),
iii. purge gas is introduced into the purge gas line (138, 138') from a regenerator chamber (42, 44, 46, 48, 50, 52, 54) of a fifth of the regenerators (30, 32, 34, 36, 38, 40, 41) at a first opening cross-section of the purge gas control element (154, 156, 158, 160, 162, 164, 166) associated with the regenerator chamber (42, 44, 46, 48, 50, 52, 54); and
iv. burnout gas is introduced into the burnout gas line (92) from a regenerator chamber (42, 44, 46, 48, 50, 52, 54) of a seventh of the regenerators (30, 32, 34, 36, 38, 40, 41) into the burnout gas line (92) at a second opening cross-section of the gas flow control element (110, 112, 114, 116, 118, 120, 122), associated with the regenerator chamber (42, 44, 46, 48, 50, 52, 54), which second opening cross-section is reduced with respect to the first opening cross-section.

14. System according to claim 13, **characterized in that** the control device (136, 136') controls the crude gas shut-off elements (64, 66, 68, 70, 72, 74, 75) and the clean gas shut-off elements (76, 78, 80, 82, 84, 86, 88) as well as the purge gas control elements (154, 156, 158, 160, 162, 164, 166) in a maintenance operation, in which over a defined time interval
i. crude gas is fed to the regenerator chambers (42, 44, 46, 48, 50, 52, 54) of a first, third and sixth regenerator of the regenerators (30, 32, 34, 36, 38, 40, 41) from the crude gas line (60),
ii. clean gas is introduced into the clean gas line (62) from the regenerator chambers (42, 44, 46, 48, 50, 52, 54) of a second and fourth regenerator of the regenerators (30, 32, 34, 36, 38, 40, 41), and
iii. the regenerator chamber (42, 44, 46, 48, 50, 52, 54) of a seventh of the regenerators (30, 32, 34, 36, 38, 40, 41) is separated from the crude gas line (60) and from the clean gas line (62) as well as from the purge gas line (138, 138').

15. System according to either claim 13 or claim 14, **characterized in that** in six consecutive time intervals the fifth of the regenerators (30, 32, 34, 36, 38, 40, 41) is different and the seventh of the regenerators (30, 32, 34, 36, 38, 40, 41) is identical, preferably the seventh of the regenerators (30, 32, 34, 36, 38, 40, 41) being different in seven consecutive time intervals.

16. System according to any of claims 8 to 15, **characterized in that** each purge gas control element (154, 156, 158, 160, 162, 164, 166) makes it possible to adjust different opening cross-sections for the passage of purge gas.

17. System according to any of claims 1 to 16, **characterized in that** an adjustable shut-off element (126) is arranged in the crude gas line (60), which device releases or prevents the feed of crude gas into the regenerator chambers (42, 44, 46, 48, 50, 52, 54).

18. System according to claim 17, **characterized by** a crude gas bypass line (128) connected to a stack (28), which bypass line communicates with the crude gas line (60) at a crude gas line connection point (130) arranged on a side of the shut-off element (126) facing the filter device.

19. System according to claim 18, **characterized in that,** a crude gas feed fan (132) is arranged in the crude gas line (60) on a side of the crude gas line connection point (130), which faces away from the filter device, for the crude gas bypass line (128), which fan is for feeding crude gas into the regenerator chambers (42, 44, 46, 48, 50, 52, 54) of the regenerators (30, 32, 34, 36, 38, 40, 41) through the crude gas line (60), which has a pressure side facing the regenerator chambers (42, 44, 46, 48, 50, 52, 54), the purge gas line (138, 138') being preferably connected to the crude gas line (60) between the crude gas feed fan (132) and the shut-off element (126).

20. System according to either claim 18 or claim 19, **characterized in that** a crude gas feed fan (134) for conveying crude gas through the crude gas line (60) from the filter device is arranged in the crude gas line (60) on a side of the crude gas line connection point (130) for the crude gas bypass line (128), the side of connection point facing the filter device, which fan has a suction side facing the filter device.

21. System according to any of claims 1 to 20, **characterized by** at least seven regenerator chambers (42, 44, 46, 48, 50, 52, 54).

22. Use of a system according to any of claims 1 to 21 for regenerative thermal oxidation of crude gas with nitrogen oxides.

23. Cement plant (10, 10') having a system according to any of claims 1 to 21.

24. Method for operating a system for treating crude gas by means of regenerative thermal oxidation, the system having a combustion chamber (29) and a plurality of regenerators (30, 32, 34, 36, 38, 40, 41) communicating with the combustion chamber (29) and each having a regenerator chamber (42, 44, 46, 48, 50, 52, 54) with a heat exchanger (56) arranged therein, in which alternately at least one of the regenerators (30, 32, 34, 36, 38, 40, 41) is purged with purge gas, crude gas is fed into at least two of the regenerators (30, 32, 34, 36, 38, 40, 41), clean gas is discharged from the regenerator chamber (42, 44, 46, 48, 50, 52, 54) of at least two of the regenerators (30, 32, 34, 36, 38, 40, 41), and the regenerator chamber (42, 44, 46, 48, 50, 52, 54) of at least one of the regenerators (30, 32, 34, 36, 38, 40, 41) is operated in a burnout operation,
**characterized in that**
the burnout gas released during the burnout operation of the regenerator chamber (42, 44, 46, 48, 50, 52, 54) of the at least one regenerator (30, 32, 34, 36, 38, 40, 41) is fed back into the crude gas to be treated and is filtered with the crude gas before being fed into the regenerators (30, 32, 34, 36, 38, 40, 41).

## Revendications

1. Installation pour l'oxydation thermique régénérative de gaz brut, comportant une chambre de combustion (29) et comportant une pluralité de régénérateurs (30, 32, 34, 36, 38, 40, 41), lesquels possèdent respectivement une chambre de régénérateur (42, 44, 46, 48, 50, 52, 54) communiquant avec la chambre de combustion (29) et comportant un échangeur de chaleur (56) disposé à l'intérieur de celle-ci, comportant une conduite d'amenée (58) pour l'amenée de gaz brut dans une conduite de gaz brut (60), la conduite d'amenée (58) communiquant avec la conduite de gaz brut (60) au moyen d'un dispositif de séparation (90), le dispositif de séparation (90) servant à la séparation de particules de matière en suspension dans le gaz brut amené depuis la conduite d'amenée (58) dans la conduite de gaz brut (60),
comportant une conduite de gaz purifié (62) pour l'évacuation de gaz purifié, dans laquelle une chambre de régénérateur (42, 44, 46, 48, 50, 52, 54) d'un régénérateur (30, 32, 34, 36, 38, 40, 41) peut aussi bien être au choix, respectivement indépendamment des chambres de régénérateurs (42, 44, 46, 48, 50, 52, 54) des autres régénérateurs (30, 32, 34, 36, 38, 40, 41), par l'intermédiaire d'un organe d'arrêt de gaz brut (64, 66, 68, 70, 72, 74, 75) réglable, raccordée à la conduite de gaz brut (60) et séparée de la conduite de gaz brut (60) qu'être au choix, par l'intermédiaire d'un organe d'arrêt de gaz purifié (76, 78, 80, 82, 84, 86, 88) réglable, raccordée à la conduite de gaz purifié (62) et séparée de la conduite de gaz purifié (62), et
comportant une conduite de gaz de combustion (92) qui présente des points de raccordement de chambres de régénérateurs (96, 98, 100, 102, 104, 106, 108) associés respectivement aux différentes chambres de régénérateurs (42, 44, 46, 48, 50, 52, 54), dans laquelle la chambre de régénérateur (42, 44, 46, 48, 50, 52, 54) de chacun des régénérateurs (30, 32, 34, 36, 38, 40, 41) peut être au choix, respectivement indépendamment des chambres de régénérateurs (42, 44, 46, 48, 50, 52, 54) des autres régénérateurs (30, 32, 34, 36, 38, 40, 41), par l'intermédiaire d'un organe de commande de débit de gaz (110, 112, 114, 116, 118, 120, 122) réglable, reliée au point de raccordement de chambre de régénérateur (96, 98, 100, 102, 104, 106,108) de la conduite de gaz de combustion (92) qui lui est associé ou séparée dudit point de raccordement,
**caractérisée en ce que**
la conduite de gaz de combustion (92) sert à recevoir le gaz de combustion contenant des matières solides provenant des chambres de régénérateurs (42, 44, 46, 48, 50, 52, 54) et est raccordée à la conduite d'amenée (58) en un point de raccordement (94, 94') disposé en amont du dispositif de séparation (90).

2. Installation selon la revendication 1, **caractérisée en ce que** le dispositif de séparation (90) est de préférence conçu comme un filtre pour filtrer des particules de matière solide d'un fluide gazeux **et/ou en ce que** chaque organe de commande de débit de gaz (110, 112, 114, 116, 118, 120, 122) permet le réglage de différentes sections transversales d'ouverture pour le passage de fluide gazeux **et/ou en ce qu'**un organe de commande de gaz de combustion (124) est disposé dans la conduite de gaz de combustion (92) pour le réglage de l'évacuation de fluide gazeux hors des chambres de régénérateurs (42, 44, 46, 48, 50, 52, 54) des régénérateurs (30, 32, 34, 36, 38, 40, 41).

3. Installation selon la revendication 1 ou 2, **caractérisée en ce que** la conduite de gaz de combustion (92) sert également à recevoir du gaz de purge s'écoulant à travers les chambres de régénérateurs (42, 44, 46, 48, 50, 52, 54).

4. Installation selon la revendication 3, **caractérisée par** un dispositif de commande (136, 136') pour la commande des organes d'arrêt de gaz brut (64, 66, 68, 70, 72, 74, 75) et des organes d'arrêt de gaz purifié (76, 78, 80, 82, 84, 86, 88) ainsi que des organes de commande de débit de gaz (110, 112, 114, 116, 118, 120, 122) dans un mode de combustion dans lequel, sur un intervalle de temps défini,
i. du gaz brut est amené aux chambres de régénérateurs (42, 44, 46, 48, 50, 52, 54) d'un premier, d'un troisième et d'un sixième régénérateur des régénérateurs (30, 32, 34, 36, 38, 40, 41) à partir de la conduite de gaz brut (60),
ii. du gaz purifié provenant des chambres de régénérateurs (42, 44, 46, 48, 50, 52, 54) d'un deuxième et d'un quatrième des régénérateurs (30, 32, 34, 36, 38, 40, 41) est introduit dans la conduite de gaz purifié (62),
iii. à partir d'une chambre de régénérateur (42, 44, 46, 48, 50, 52, 54) d'un cinquième des régénérateurs (30, 32, 34, 36, 38, 40, 41), du gaz de purge est introduit dans la conduite de gaz de combustion (92) dans une première section transversale d'ouverture de l'organe de commande de débit de gaz (110, 112, 114, 116, 118, 120, 122) associé à la chambre de régénérateur (42, 44, 46, 48, 50, 52, 54) ; et
iv. du gaz de combustion est introduit dans la conduite de gaz de combustion (92) à partir d'une chambre de régénérateur (42, 44, 46, 48, 50, 52, 54) d'un septième des régénérateurs (30, 32, 34, 36, 38, 40, 41) dans la conduite de gaz de combustion (92) dans une seconde section transversale d'ouverture, réduite par rapport à la première section transversale d'ouverture, de l'organe de commande de débit de gaz (110, 112, 114, 116, 118, 120, 122) associé à la chambre de régénérateur (42, 44, 46, 48, 50, 52, 54) ;
ou
v. du gaz brut est amené aux chambres de régénérateurs (42, 44, 46, 48, 50, 52, 54) d'un premier et d'un troisième régénérateur des régénérateurs (30, 32, 34, 36, 38, 40, 41) à partir de la conduite de gaz brut (60),
vi. du gaz purifié provenant des chambres de régénérateurs (42, 44, 46, 48, 50, 52, 54) d'un deuxième, d'un quatrième et d'un sixième régénérateur des régénérateurs (30, 32, 34, 36, 38, 40, 41) est introduit dans la conduite de gaz purifié (62),
vii. à partir d'une chambre de régénérateur (42, 44, 46, 48, 50, 52, 54) d'un cinquième des régénérateurs (30, 32, 34, 36, 38, 40, 41), du gaz de purge est introduit dans la conduite de gaz de combustion (92) dans une première section transversale d'ouverture de l'organe de commande de débit de gaz (110, 112, 114, 116, 118, 120, 122) associé à la chambre de régénérateur (42, 44, 46, 48, 50, 52, 54) ; et
viii. du gaz de combustion est introduit dans la conduite de gaz de combustion (92) à partir d'une chambre de régénérateur (42, 44, 46, 48, 50, 52, 54) d'un septième des régénérateurs (30, 32, 34, 36, 38, 40, 41) dans la conduite de gaz de combustion (92) dans une seconde section transversale d'ouverture, réduite par rapport à la première section transversale d'ouverture, de l'organe de commande de débit de gaz (110, 112, 114, 116, 118, 120, 122) associé à la chambre de régénérateur (42, 44, 46, 48, 50, 52, 54).

5. Installation selon la revendication 4, **caractérisée en ce que** le dispositif de commande (136, 136') est configuré pour commander les organes d'arrêt de gaz brut (64, 66, 68, 70, 72, 74, 75) et les organes d'arrêt de gaz purifié (76, 78, 80, 82, 84, 86, 88) ainsi que les organes de commande de débit de gaz (110, 112, 114, 116, 118, 120, 122) pour un fonctionnement normal, dans lequel
i. du gaz brut est amené aux chambres de régénérateurs (42, 44, 46, 48, 50, 52, 54) d'un premier, d'un troisième et d'un sixième régénérateur des régénérateurs (30, 32, 34, 36, 38, 40, 41) à partir de la conduite de gaz brut (60),
ii. du gaz purifié provenant des chambres de régénérateurs (42, 44, 46, 48, 50, 52, 54) d'un deuxième et d'un quatrième et d'un sixième régénérateur des régénérateurs (30, 32, 34, 36, 38, 40, 41) est introduit dans la conduite de gaz purifié (62), et
iii. à partir d'une chambre de régénérateur (42, 44, 46, 48, 50, 52, 54) d'un septième des régénérateurs (30, 32, 34, 36, 38, 40, 41), du gaz de purge est introduit dans la conduite de gaz de combustion (92) dans une première section transversale d'ouverture de l'organe de commande de débit de gaz (110, 112, 114, 116, 118, 120, 122) associé à la chambre de régénérateur (42, 44, 46, 48, 50, 52, 54).

6. Installation selon la revendication 4 ou 5, **caractérisée en ce que,** dans six intervalles de temps successifs, le cinquième des régénérateurs (30, 32, 34, 36, 38, 40, 41) est respectivement différent et le septième des régénérateurs (30, 32, 34, 36, 38, 40, 41) est respectivement identique.

7. Installation selon la revendication 6, **caractérisée en ce que** le septième des régénérateurs (30, 32, 34, 36, 38, 40, 41) est de préférence respectivement différent dans sept intervalles de temps successifs.

8. Installation selon l'une des revendications 1 ou 2, **caractérisée par** une conduite de gaz de purge (138, 138') qui sert à recevoir du gaz de purge s'écoulant à travers les chambres de régénérateurs (42, 44, 46, 48, 50, 52, 54), dans laquelle la conduite de gaz de purge (138, 138') présente des points de raccordement de chambres de régénérateurs (96, 98, 100, 102, 104, 106, 108) respectivement associés aux différentes chambres de régénérateurs (42, 44, 46, 48, 50, 52, 54) et dans laquelle la chambre de régénérateur (42, 44, 46, 48, 50, 52, 54) de chacun des régénérateurs (30, 32, 34, 36, 38, 40, 41) peut être au choix, respectivement indépendamment des chambres de régénérateurs (42, 44, 46, 48, 50, 52, 54) des autres régénérateurs (30, 32, 34, 36, 38, 40, 41), par l'intermédiaire d'un organe de commande de gaz de purge (154, 156, 158, 160, 162, 164, 166) réglable, reliée au point de raccordement de chambre de régénérateur (140, 142, 144, 146, 148, 150, 152) de la conduite de gaz de purge (138, 138') qui lui est associé ou séparée dudit point de raccordement.

9. Installation selon l'une des revendications 1 ou 2, **caractérisée par**
une conduite de gaz de purge (138) raccordée à la conduite de gaz brut
qui, lors d'une purge des chambres de régénérateurs, sert à recevoir le gaz de purge s'écoulant à travers les chambres de régénérateurs (42, 44, 46, 48, 50, 52, 54) dans la conduite de gaz brut (60) afin d'amener de nouveau à la conduite de gaz brut le gaz brut accumulé dans la chambre de régénérateur,
dans laquelle la conduite de gaz de purge (138) présente des points de raccordement de chambres de régénérateurs (96, 98, 100, 102, 104, 106, 108) respectivement associés aux différentes chambres de régénérateurs (42, 44, 46, 48, 50, 52, 54) et dans laquelle la chambre de régénérateur (42, 44, 46, 48, 50, 52, 54) de chacun des régénérateurs (30, 32, 34, 36, 38, 40, 41) peut être au choix, respectivement indépendamment des chambres de régénérateurs (42, 44, 46, 48, 50, 52, 54) des autres régénérateurs (30, 32, 34, 36, 38, 40, 41), par l'intermédiaire d'un organe de commande de gaz de purge (154, 156, 158, 160, 162, 164, 166) réglable, reliée au point de raccordement de chambre de régénérateur (140, 142, 144, 146, 148, 150, 152) de la conduite de gaz de purge (138, 138') qui lui est associé ou séparée dudit point de raccordement.

10. Installation selon la revendication 9, **caractérisée en ce que** l'organe de commande de gaz de purge (154, 156, 158, 160, 162, 164, 166) est disposé dans la conduite de gaz de purge (138).

11. Installation selon l'une des revendications 1 ou 2, **caractérisée par**
une conduite de gaz de purge (138') reliée à la conduite de gaz purifié (62) et servant à recevoir le gaz de purge s'écoulant de la conduite de gaz purifié (62) à travers les chambres de régénérateurs (42, 44, 46, 48, 50, 52, 54) lors d'une purge des chambres de régénérateurs afin de purger le gaz brut accumulé dans une chambre de régénérateur (42, 44, 46, 48, 50, 52, 54) dans la chambre de combustion,
dans laquelle la conduite de gaz de purge (138') présente des points de raccordement de chambres de régénérateurs (96, 98, 100, 102, 104, 106, 108) respectivement associés aux différentes chambres de régénérateurs (42, 44, 46, 48, 50, 52, 54) et dans laquelle la chambre de régénérateur (42, 44, 46, 48, 50, 52, 54) de chacun des régénérateurs (30, 32, 34, 36, 38, 40, 41) peut être au choix, respectivement indépendamment des chambres de régénérateurs (42, 44, 46, 48, 50, 52, 54) des autres régénérateurs (30, 32, 34, 36, 38, 40, 41), par l'intermédiaire d'un organe de commande de gaz de purge (154, 156, 158, 160, 162, 164, 166) réglable, reliée au point de raccordement de chambre de régénérateur (140, 142, 144, 146, 148, 150, 152) de la conduite de gaz de purge (138, 138') qui lui est associé ou séparée dudit point de raccordement.

12. Installation selon la revendication 11, **caractérisée en ce qu'**une soufflante est disposée dans la conduite de gaz de purge (138').

13. Installation selon l'une des revendications 8 à 12, **caractérisée par** un dispositif de commande (136, 136') pour la commande des organes d'arrêt de gaz brut (64, 66, 68, 70, 72, 74, 75), des organes d'arrêt de gaz purifié (76, 78, 80, 82, 84, 86, 88) et des organes de commande de débit de gaz (110, 112, 114, 116, 118, 120, 122) ainsi que des organes de commande de gaz de purge (154, 156, 158, 160, 162, 164, 166) dans un mode de combustion dans lequel, sur un intervalle de temps défini,
i. du gaz brut est amené aux chambres de régénérateurs (42, 44, 46, 48, 50, 52, 54) d'un premier, d'un troisième et d'un sixième régénérateur des régénérateurs (30, 32, 34, 36, 38, 40, 41) à partir de la conduite de gaz brut (60),
ii. du gaz purifié provenant des chambres de régénérateurs (42, 44, 46, 48, 50, 52, 54) d'un deuxième et d'un quatrième des régénérateurs (30, 32, 34, 36, 38, 40, 41) est introduit dans la conduite de gaz purifié (62),
iii. à partir d'une chambre de régénérateur (42, 44, 46, 48, 50, 52, 54) d'un cinquième des régénérateurs (30, 32, 34, 36, 38, 40, 41), du gaz de purge est introduit dans la conduite de gaz de purge (138, 138') dans une première section transversale d'ouverture de l'organe de commande de gaz de purge (154, 156, 158, 160, 162, 164, 166) associé à la chambre de régénérateur (42, 44, 46, 48, 50, 52, 54) ; et
iv. du gaz de combustion est introduit dans la conduite de gaz de combustion (92) à partir d'une chambre de régénérateur (42, 44, 46, 48, 50, 52, 54) d'un septième des régénérateurs (30, 32, 34, 36, 38, 40, 41) dans la conduite de gaz de combustion (92) dans une seconde section transversale d'ouverture, réduite par rapport à la première section transversale d'ouverture, de l'organe de commande de débit de gaz (110, 112, 114, 116, 118, 120, 122) associé à la chambre de régénérateur (42, 44, 46, 48, 50, 52, 54) ;
ou
i. du gaz brut est amené aux chambres de régénérateurs (42, 44, 46, 48, 50, 52, 54) d'un premier et d'un troisième régénérateur des régénérateurs (30, 32, 34, 36, 38, 40, 41) à partir de la conduite de gaz brut (60),
ii. du gaz purifié provenant des chambres de régénérateurs (42, 44, 46, 48, 50, 52, 54) d'un deuxième, d'un quatrième et d'un sixième régénérateur des régénérateurs (30, 32, 34, 36, 38, 40, 41) est introduit dans la conduite de gaz purifié (62),
iii. à partir d'une chambre de régénérateur (42, 44, 46, 48, 50, 52, 54) d'un cinquième des régénérateurs (30, 32, 34, 36, 38, 40, 41), du gaz de purge est introduit dans la conduite de gaz de purge (138, 138') dans une première section transversale d'ouverture de l'organe de commande de gaz de purge (154, 156, 158, 160, 162, 164, 166) associé à la chambre de régénérateur (42, 44, 46, 48, 50, 52, 54) ; et
iv. du gaz de combustion est introduit dans la conduite de gaz de combustion (92) à partir d'une chambre de régénérateur (42, 44, 46, 48, 50, 52, 54) d'un septième des régénérateurs (30, 32, 34, 36, 38, 40, 41) dans la conduite de gaz de combustion (92) dans une seconde section transversale d'ouverture, réduite par rapport à la première section transversale d'ouverture, de l'organe de commande de débit de gaz (110, 112, 114, 116, 118, 120, 122) associé à la chambre de régénérateur (42, 44, 46, 48, 50, 52, 54).

14. Installation selon la revendication 13, **caractérisée en ce que** le dispositif de commande (136, 136') sert à commander les organes d'arrêt de gaz brut (64, 66, 68, 70, 72, 74, 75) et les organes d'arrêt de gaz purifié (76, 78, 80, 82, 84, 86, 88) ainsi que les organes de commande de gaz de purge (154, 156, 158, 160, 162, 164, 166) dans un mode de maintenance dans lequel, sur un intervalle de temps défini,
i. du gaz brut est amené aux chambres de régénérateurs (42, 44, 46, 48, 50, 52, 54) d'un premier, d'un troisième et d'un sixième régénérateur des régénérateurs (30, 32, 34, 36, 38, 40, 41) à partir de la conduite de gaz brut (60),
ii. du gaz purifié provenant des chambres de régénérateurs (42, 44, 46, 48, 50, 52, 54) d'un deuxième et d'un quatrième régénérateur des régénérateurs (30, 32, 34, 36, 38, 40, 41) est introduit dans la conduite de gaz purifié (62), et
iii. la chambre de régénérateur (42, 44, 46, 48, 50, 52, 54) d'un septième des régénérateurs (30, 32, 34, 36, 38, 40, 41) est séparée de la conduite de gaz brut (60) et de la conduite de gaz purifié (62) et de la conduite de gaz de purge (138, 138').

15. Installation selon la revendication 13 ou 14, **caractérisée en ce que,** pendant six intervalles de temps consécutifs, le cinquième des régénérateurs (30, 32, 34, 36, 38, 40, 41) est différent et le septième des régénérateurs (30, 32, 34, 36, 38, 40, 41) est identique, dans laquelle, de préférence, le septième des régénérateurs (30, 32, 34, 36, 38, 40, 41) est différent pendant sept intervalles de temps consécutifs.

16. Installation selon l'une des revendications 8 à 15, **caractérisée en ce que** chaque organe de commande de gaz de purge (154, 156, 158, 160, 162, 164, 166) permet de régler des sections transversales d'ouverture différentes pour le passage du gaz de purge.

17. Installation selon l'une des revendications 1 à 16,
**caractérisée en ce qu'**un organe d'arrêt (126) réglable est disposé dans la conduite de gaz brut (60), lequel sert à libérer ou à empêcher l'amenée de gaz brut dans les chambres de régénérateurs (42, 44, 46, 48, 50, 52, 54).

18. Installation selon la revendication 17, **caractérisée par** une conduite de dérivation de gaz brut (128) reliée à une cheminée (28), laquelle conduite de dérivation communique avec la conduite de gaz brut (60) en un point de raccordement de conduite de gaz brut (130) disposé sur le côté de l'organe d'arrêt (126) orienté vers le dispositif de filtrage.

19. Installation selon la revendication 18, **caractérisée en ce qu'**est disposée dans la conduite de gaz brut (60), sur un côté du point de raccordement de conduite de gaz brut (130), lequel côté est opposé au dispositif de filtrage, pour la conduite de dérivation de gaz brut (128), une soufflante d'amenée de gaz brut (132) pour l'amenée de gaz brut aux chambres de régénérateurs (42, 44, 46, 48, 50, 52, 54) des régénérateurs (30, 32, 34, 36, 38, 40, 41) par la conduite de gaz brut (60), laquelle soufflante possède un côté de refoulement tourné vers les chambres de régénérateurs (42, 44, 46, 48, 50, 52, 54), dans laquelle la conduite de gaz de purge (138, 138') est de préférence raccordée à la conduite de gaz brut (60) entre la soufflante d'amenée de gaz brut (132) et l'organe d'arrêt (126).

20. Installation selon la revendication 18 ou 19, **caractérisée en ce qu'**est disposée dans la conduite de gaz brut (60), sur un côté du point de raccordement de conduite de gaz brut (130), lequel côté est tourné vers le dispositif de filtration, pour la conduite de dérivation de gaz brut (128), une soufflante de transport de gaz brut (134) pour le transport de gaz brut à travers la conduite de gaz brut (60) hors du dispositif de filtration, laquelle soufflante possède un côté d'aspiration tourné vers le dispositif de filtration.

21. Installation selon l'une des revendications 1 à 20, **caractérisée par** au moins sept chambres de régénérateurs (42, 44, 46, 48, 50, 52, 54).

22. Utilisation d'une installation selon l'une des revendications 1 à 21 pour l'oxydation thermique régénérative de gaz brut avec des oxydes d'azote.

23. Cimenterie (10, 10') comportant une installation selon l'une des revendications 1 à 21.

24. Procédé permettant de faire fonctionner une installation pour le traitement de gaz brut au moyen d'une oxydation thermique régénérative, dans lequel l'installation présente une chambre de combustion (29) et une pluralité de régénérateurs (30, 32, 34, 36, 38, 40, 41) qui communiquent avec la chambre de combustion (29) et qui possèdent respectivement une chambre de régénérateur (42, 44, 46, 48, 50, 52, 54) comportant un échangeur de chaleur (56) disposé à l'intérieur de celle-ci, dans lequel, en alternance, au moins l'un des régénérateurs (30, 32, 34, 36, 38, 40, 41) est purgé avec du gaz de purge, du gaz brut est amené à au moins deux des régénérateurs (30, 32, 34, 36, 38, 40, 41), du gaz purifié est évacué de la chambre de régénérateur (42, 44, 46, 48, 50, 52, 54) d'au moins deux des régénérateurs (30, 32, 34, 36, 38, 40, 41) et la chambre de régénérateur (42, 44, 46, 48, 50, 52, 54) d'au moins l'un des régénérateurs (30, 32, 34, 36, 38, 40, 41) est amenée dans un mode de combustion,
**caractérisé en ce que**
le gaz de combustion libéré lors du mode de combustion de la chambre de régénérateur (42, 44, 46, 48, 50, 52, 54) de l'au moins un régénérateur (30, 32, 34, 36, 38, 40, 41) est recyclé dans le gaz brut à traiter et est filtré avec le gaz brut avant d'être amené aux régénérateurs (30, 32, 34, 36, 38, 40, 41).
